# EUROPEAN PATENT APPLICATION

(11) **EP 4 140 286 A1**
(43) Date of publication of application: **01.03.2023**
(21) Application number: 21792997.5
(22) Date of filing: 01.04.2021
(51) Int. Cl.: A01D 46/00, B25J 13/08

(54) **CROP HARVESTING METHOD, CROP HARVESTING DEVICE, AND CROP HARVESTING SYSTEM**

(30) Priority: 22.04.2020 JP 2020076051
(71) Applicant: DENSO CORPORATION, Kariya-city, Aichi 448-8661 (JP)
(72) Inventor: INADA, Seisho, Kariya-city, Aichi 4488661 (JP); HANDA, Gou, Kariya-city, Aichi 4488661 (JP)
(74) Representative: Kuhnen & Wacker Patent- und Rechtsanwaltsbüro PartG mbB
(86) International application number: PCT/JP2021/014193
(87) International publication number: WO 2021/215218

(57) **Abstract**

A crop harvesting method is a harvesting method in which fruit (91) in a bunch (90) is separated from a fruit stem (93) to individually harvest the fruit. The crop harvesting method includes placement processing of placing a separation mechanism (30), in which a predetermined gap (S) is formed, so that the base end portion of the fruit stem is located inside the gap, and separation processing executed following the placement processing to move the separation mechanism toward the tip side of the fruit stem to separate the fruit from the fruit stem.

## Description

### [Cross Reference to Related Application]

The present application is based on Japanese Patent Application No. 2020-076051 filed April 22, 2020, the description of which is incorporated herein by reference.

### [Technical Field]

The present disclosure relates to crop harvesting methods for harvesting crops fruited on the main stem or branches, crop harvesting devices, and crop harvesting systems.

### [Background Art]

In recent years, various devices for improving efficiency of agricultural work are under development. For example, there is a device for individually harvesting a target that is fruit in clusters, such as cherry tomatoes. However, harvest work using devices of the conventional art took a long time and was inefficient because the devices were configured to harvest a bunch of fruit in one operation.

### [Citation List]

### [Patent Literature]

PTL 1: JP 2017-51104 A

### [Summary of the Invention]

The present disclosure has been made in light of the above issues and aims to provide a crop harvesting method, crop harvesting device, and crop harvesting system, with which fruit crops in clusters can be individually and efficiently harvested in a short time.

In an aspect of the present disclosure, a crop harvesting method is a harvesting method in which fruit in a bunch is separated from a fruit stem to individually harvest the fruit. The method includes placement processing that places a separation mechanism, in which a predetermined gap is formed, such that a base-side portion of the fruit stem is positioned inside the gap; and separation processing that is executed following the placement processing to move the separation mechanism toward a tip side of the fruit stem to separate the fruit from the fruit stem.

With this configuration, since multiple pieces of fruit in a bunch can be individually separated and harvested in one operation, the harvesting target in a bunch can be individually harvested with high efficiency in a short time.

Also, according to an aspect of the present disclosure, when configuring a crop harvesting system which automatically performs harvesting using a viewing device, for example, the viewing device may only need to recognize the entire bunch or the main stem, and does not necessarily have to individually recognize all the fruit. Therefore, comparing to the case where the fruit is individually recognized and harvested, the recognition accuracy of the viewing device can be reduced. Consequently, advanced control for individually recognizing and harvesting the fruit is not required, and thus the control configuration can be simplified, resultantly reducing the load of control.

In the case of a configuration in which, for example, harvesting is performed by cutting off the fruit stem using a scissors-shaped end effector, the cutting edges of the scissors-shaped end effector may contact the main stem or branch when the end effector is moved, and may damage the main stem or branch, or cut it off in worse. Damaging or cutting off the main stem or branch may cause various plant diseases, or in worse, may kill the plant, which may lead to a subsequent decline in yield.

In contrast, according to an aspect of the present disclosure, the fruit can be separated from the fruit stem and harvested without using a cutter, and therefore, the main stem or branch is prevented from being damaged or cut off. Consequently, plant diseases can be suppressed and fruit yield is prevented from being reduced, and harvesting efficiency can be greatly improved.

### [Brief Description of the Drawings]

The aim set forth above and other aims, features, and advantageous effects of the present disclosure will become clearer from the following detailed description given referring to the accompanying drawings. In the drawings:
Fig. 1 is a perspective view from above illustrating a state in which a holding mechanism and a separation mechanism are open in a crop harvesting device according to a first embodiment;
Fig. 2 is a perspective view from above illustrating a state in which the holding mechanism and the separation mechanism are closed in the crop harvesting device according to the first embodiment;
Fig. 3 is a perspective view from above illustrating a state in which the holding mechanism and the separation mechanism are closed, with the separation mechanism moved away from the holding member in the crop harvesting device according to the first embodiment;
Fig. 4 is an enlarged plan view illustrating a tip portion of the separation mechanism in the crop harvesting device according to the first embodiment;
Fig. 5 is an enlarged side view illustrating a configuration around a base member in a state in which the separation mechanism is close to the holding mechanism in the crop harvesting device according to the first embodiment;
Fig. 6 is an enlarged side view illustrating a configuration around the base member in a state in which the separation mechanism is away from the holding mechanism in the crop harvesting device according to the first embodiment;
Fig. 7 is a schematic diagram illustrating a configuration of a crop harvesting system according to the first embodiment;
Fig. 8 is a diagram illustrating an example of visual information acquired by a viewing device in the crop harvesting system according to the first embodiment;
Fig. 9 is a diagram conceptually illustrating an example in the case where individual positions have been specified by a position specification processor in the crop harvesting system according to the first embodiment;
Fig. 10 is a first example of a side view illustrating an example of a movement mode and an operation mode of the crop harvesting device when a harvesting operation is executed in the crop harvesting system according to the first embodiment;
Fig. 11 is a plan view illustrating the crop harvesting device shown in Fig. 10, according to the first embodiment;
Fig. 12 is a second example of a side view illustrating an example of the movement mode and the operation mode of the crop harvesting device when a harvesting operation is executed in the crop harvesting system according to the first embodiment;
Fig. 13 is a third example of a side view illustrating an example of the movement mode and the operation mode of the crop harvesting device when a harvesting operation is executed in the crop harvesting system according to the first embodiment;
Fig. 14 is a plan view illustrating the crop harvesting device shown in Fig. 13, according to the first embodiment;
Fig. 15 is an enlarged plan view from above illustrating a tip portion of the separation mechanism shown in Fig. 14, according to the first embodiment;
Fig. 16 is a fourth example of a side view illustrating an example of the movement mode and the operation mode of the crop harvesting device when a harvesting operation is executed in the crop harvesting system according to the first embodiment;
Fig. 17 is a flowchart illustrating an example of control of a harvesting operation executed in the crop harvesting system according to the first embodiment;
Fig. 18 is a perspective view from above illustrating a state in which a holding mechanism and a separation mechanism are open in a crop harvesting device according to a second embodiment;
Fig. 19 is a perspective view from above illustrating a state in which the holding mechanism and the separation mechanism are closed in the crop harvesting device according to the second embodiment;
Fig. 20 is a perspective view from above illustrating a state in which the holding mechanism and the separation mechanism are closed, with the separation mechanism moved away from the holding member in the crop harvesting device according to the second embodiment;
Fig. 21 is a plan view illustrating an open state along with a closed state in the crop harvesting device according to the second embodiment;
Fig. 22 is a side view illustrating a crop harvesting device according to a third embodiment;
Fig. 23 is a plan view illustrating a holding mechanism in an open state in the crop harvesting device according to the third embodiment;
Fig. 24 is a plan view illustrating the holding mechanism in a closed state in the crop harvesting device according to the third embodiment;
Fig. 25 is a plan view illustrating a separation mechanism in an open state in the crop harvesting device according to the third embodiment;
Fig. 26 is a plan view illustrating the separation mechanism in a closed state in the crop harvesting device according to the third embodiment;
Fig. 27 is a first example of a side view illustrating an example of a movement mode and an operation mode of the crop harvesting device when a harvesting operation is executed in the crop harvesting system according to the third embodiment;
Fig. 28 is a second example of a side view illustrating an example of the movement mode and the operation mode of the crop harvesting device when a harvesting operation is executed in the crop harvesting system according to the third embodiment;
Fig. 29 is a third example of a side view illustrating an example of the movement mode and the operation mode of the crop harvesting device when a harvesting operation is executed in the crop harvesting system according to the third embodiment;
Fig. 30 is a fourth example of a side view illustrating an example of the movement mode and the operation mode of the crop harvesting device when a harvesting operation is executed in the crop harvesting system according to the third embodiment;
Fig. 31 is a plan view illustrating an example of a crop harvesting device according to a fourth embodiment;
Fig. 32 is a first example of a side view illustrating an example of a movement mode and an operation mode of the crop harvesting device when a harvesting operation is performed using the crop harvesting device according to the fourth embodiment;
Fig. 33 is a plan view illustrating the crop harvesting device shown in Fig. 32, according to the fourth embodiment;
Fig. 34 is a second example of a side view illustrating an example of the movement mode and the operation mode of the crop harvesting device when a harvesting operation is performed using the crop harvesting device according to the fourth embodiment;
Fig. 35 is a third example of a side view illustrating an example of the movement mode and the operation mode of the crop harvesting device when a harvesting operation is performed using the crop harvesting device according to the fourth embodiment;
Fig. 36 is a plan view illustrating the crop harvesting device shown in Fig. 35, according to the fourth embodiment; and
Fig. 37 is a fourth example of a side view illustrating an example of the movement mode and the operation mode of the crop harvesting device when a harvesting operation is performed using the crop harvesting device according to the fourth embodiment.

### [Description of the Embodiments]

Referring to the drawings, some embodiments will be described. It should be noted that the same reference signs are designated to components which are substantially the same between the embodiments to omit explanation.

### (First Embodiment)

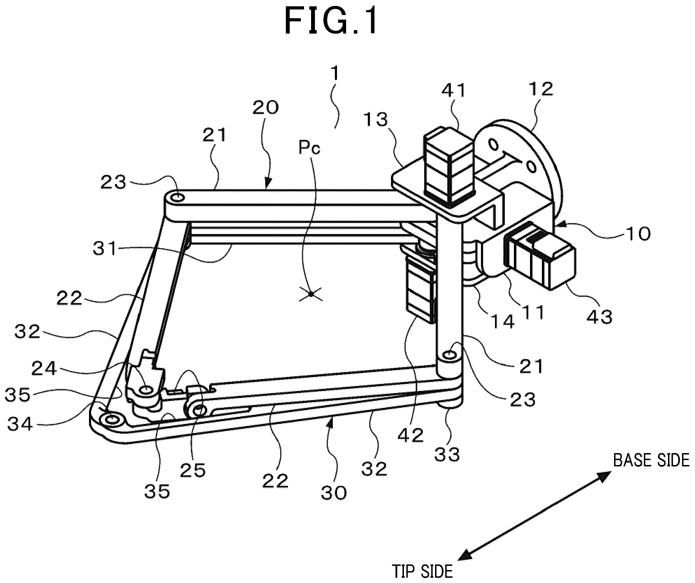

Referring to Figs. 1 to 17, a first embodiment will be described.

### <Crop Harvesting Device>

First, referring to Figs. 1 to 6, a configuration of a crop harvesting device 1 will be described. The crop harvesting device 1 of the present embodiment (termed harvester 1 hereinafter) targets fruit, vegetables or fruit trees that bear multiple pieces of fruit in clusters, such as cherry tomatoes and grapes, as a harvesting target. Using the harvester 1 of the present embodiment, fruit in clusters can be separated from the fruit stem and can be individually harvested.

The harvester 1 is used, for example, being mounted to the tip of a robot arm. As shown in Figs. 1 to 3, the harvester 1 includes a base member 10, a holding mechanism 20, and a separation mechanism 30. In the following description, the base member 10 side of the harvester 1 is referred to as a base side, and the opposite side to the base member 10 is referred to as a tip side. The base member 10 is configured to serve as a base of the holding mechanism 20 and the separation mechanism 30, with these mechanisms mounted thereto.

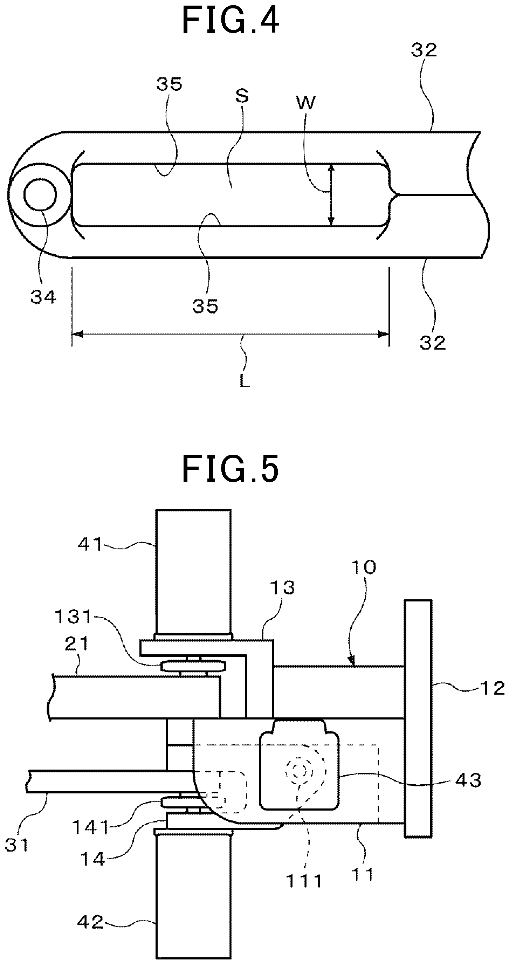

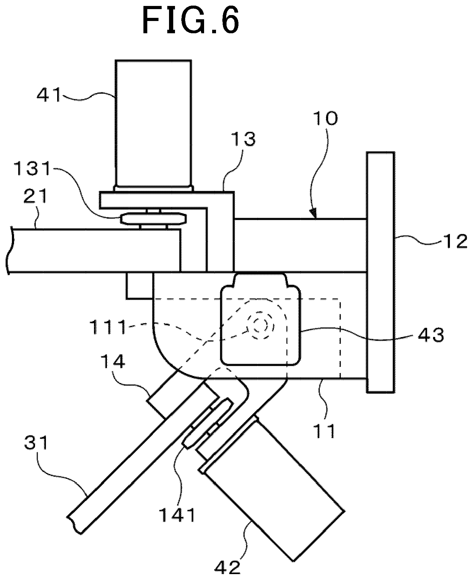

As also shown in Figs. 5 and 6, the base member 10 includes a body part 11, a mounting part 12, a holding mechanism mounting part 13, and a separation mechanism mounting part 14. The body part 11 configures the body of the base member 10. The mounting part 12 is configured such that the harvester 1 can be mounted at the tip of a robot arm via this mounting part. The mounting part 12 is formed, for example, in a flange shape and is fixed to the body part 11.

Each first separation link member 31 has a base-side end portion which is pivotably mounted to the base member 10. In this case, the base-side end portion of the first separation link member 31 pivotably rotates about a base joint part, not shown, which is provided to the separation mechanism mounting part 14, with this joint part acting as a fulcrum. The base joint parts corresponding to the two first separation link members 31 are provided at respective positions such that the inner surfaces of the two first separation link members 31 are entirely brought into contact with each other when these members are pivotably rotated in the direction in which they come close to each other. Specifically, the base joint parts of the first separation link members 31 are provided at respective positions allowing the entire inner surfaces of these members to come into contact with each other in the closed state.

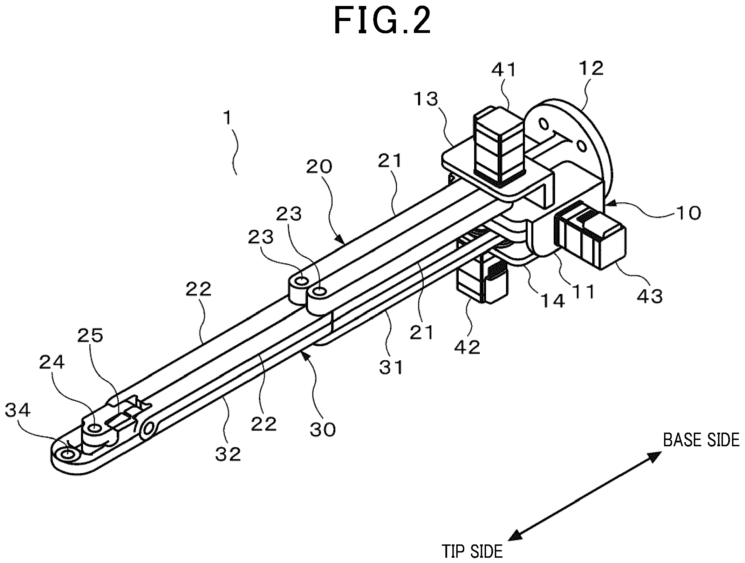

Furthermore, the first separation link members 31 have tip-side end portions which are pivotably connected to base-side end portions of respective second separation link members 32 via respective intermediate joint parts 33. The two separation link members 32 have tip-side end portions which are pivotably connected to each other via a tip-side joint part 34. The harvester 1 can open and close the separation mechanism 30 by pivotably rotating the two first separation link members 31, i.e., can switch between the open state shown in Fig. 1 and the closed state shown in Fig. 2. In the present embodiment, the two first separation link members 31 and the two second separation link members 32 are disposed so as to extend linearly when the separation mechanism 30 is in the closed state.

As shown in Fig. 4, the separation mechanism 30 includes gap forming parts 35. The gap forming portions 35 are formed by, for example, recessing the inner tip portions of the respective second separation link members 32 outward. When the separation mechanism 30 is in the closed state and the gap forming parts 35 of the two second separation link members 32 face each other, a gap S is formed. In other words, the gap forming portions 35 form the gap S in a state in which the separation mechanism 30 is closed.

As shown in Fig. 4, in the present embodiment, the gap S has a length L corresponding to the longitudinal dimension of the separation mechanism 30 in the closed state. Furthermore, as shown in Fig. 4, the gap S has a width W corresponding to the dimension perpendicular to the longitudinal direction of the separation mechanism 30 in the closed state. In this case, the length L of the gap S is larger than the width W thereof. Also, the width W of the gap S is set so as to be slightly larger than the outer diameter of the fruit stem of the harvesting target, e.g., about 5 mm to 25 mm. Specifically, in the present embodiment, the term predetermined in the expression predetermined gap S refers to a length of about 5 mm to 25 mm. Thus, the fruit stem can be inserted inside the gap forming parts 35, i.e., into the gap S, when the separation mechanism 30 is in the closed state. Also, in this case, the separation mechanism 30 is ensured to be movable along the fruit stem without holding it.

It should be noted that the gap forming parts 35 may be provided with members, such as of a fluororesin, having a small friction coefficient on the inside thereof. Alternatively, the gap forming parts 35 may be formed of members, such as of a fluororesin, having a small friction coefficient, separately from the second separation link members 32, and may be attached to the respective second separation link members 32. With this configuration, the separation mechanism 30 can be smoothly moved due to the reduced friction coefficient of the gap forming parts 35 brought into contact with the fruit stem.

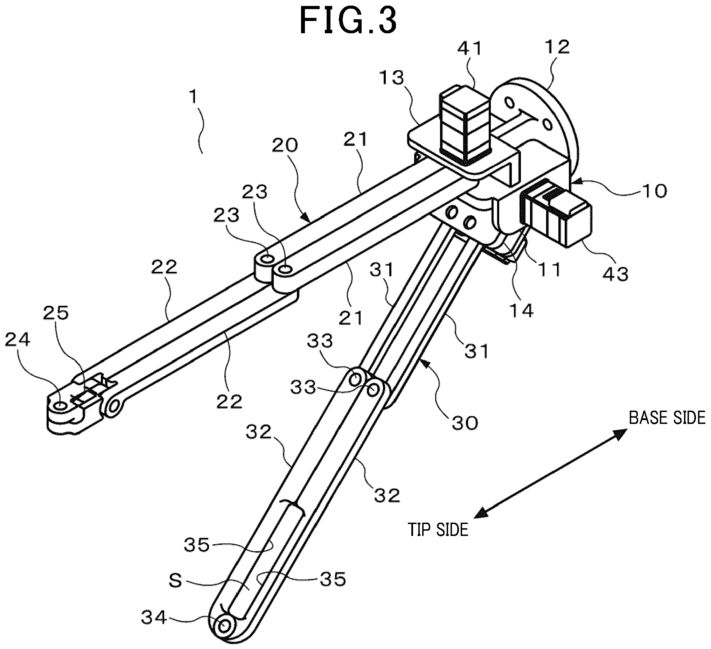

As shown in Fig. 3, the separation mechanism 30 is configured such that at least the gap forming parts 35 can move in the direction away from or approaching the holding mechanism 20. In the present embodiment, the separation mechanism 30 is configured to be pivotably movable with the base side thereof acting as a fulcrum.

As shown in Figs. 1 to 3, the harvester 1 includes a first driving unit 41, a second driving unit 42, and a third driving unit 43. The driving units 41, 42 and 43 are configured by actuators, such as stepping motors, and are driven upon reception of a command from an external control unit. It should be noted that the driving units 41, 42 and 43 are not limited to have an electrically driven configuration, but may have a pneumatically or hydraulically driven configuration.

The first driving unit 41 is disposed above the base member 10, i.e., on the upper surface of the holding mechanism mounting part 13 in this case. The first driving unit 41 is used for opening and closing the holding mechanism 20. As shown in Fig. 5 and 6, the first driving unit 41 is connected to, for example, the base portion of each first holding link member 21 via a holding mechanism-side gear 131 disposed inside the base member 10. Thus, the first holding link members 21 can pivotably rotate being driven by the first driving unit 41, as a result of which the holding mechanism 20 is opened and closed.

The second driving unit 42 is disposed below the base member 10, i.e., on the lower surface of the separation mechanism mounting part 14 in this case. The second driving unit 42 is used for opening and closing the separation mechanism 30. As shown in Figs. 5 and 6, the second driving unit 42 is connected to, for example, the base portion of each first separation link member 31 via a separation mechanism-side gear 141 disposed inside the base member 10. Thus, the first separation link members 31 can pivotably rotate being driven by the second driving unit 42, as a result of which the separation mechanism 30 is opened and closed.

The third driving unit 43 is disposed on the side surface of the base member 10, i.e., on the side surface of the body part 11 in this case. The third driving unit 43 is used for moving the separation mechanism 30 in the direction away from or approaching the holding mechanism 20. In the present embodiment, the third driving unit 43 pivotably rotates the separation mechanism 30 in the vertical direction with the base side of the separation mechanism 30 acting as a fulcrum. In this case, a pivot shaft 111 links between the third driving unit 43 and the separation mechanism mounting part 14, penetrating the side surfaces of the body part 11. Thus, the rotational driving of the third driving unit 43 is transmitted to the separation mechanism mounting part 14 via the pivot shaft 111, so that the separation mechanism 30 is pivotably rotated together with the separation mechanism mounting part 14.

### <Crop Harvesting System>

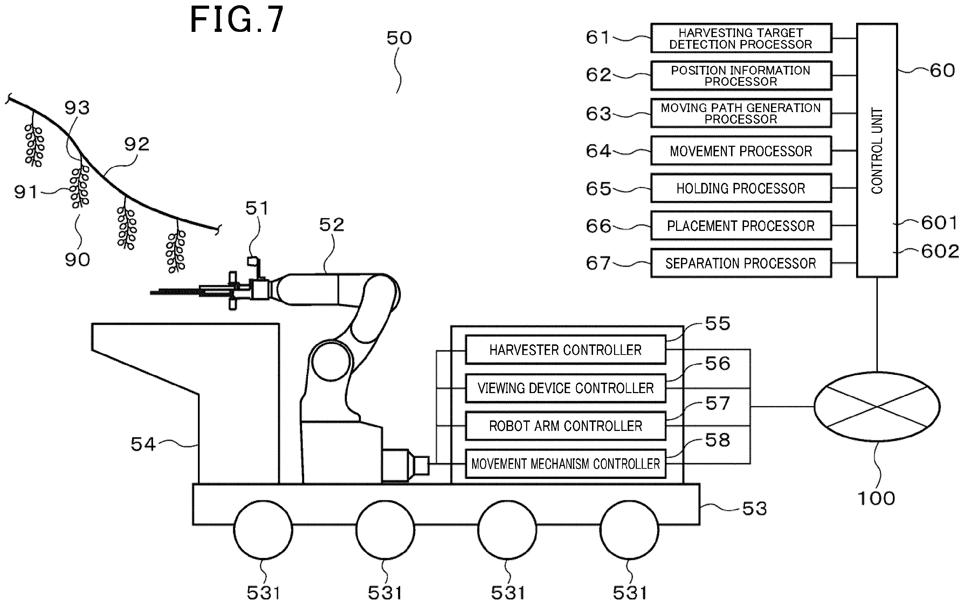

Next, referring to Figs. 7 to 17 also, an example of a crop harvesting system using the harvester 1 will now be described. A crop harvesting system 50 shown in Fig. 7 is an example in which cherry tomato is set as crop to be harvested. The crop harvesting system 50 of the present embodiment targets individual fruit 91 in a bunch 90 as a harvesting target, and can separate the fruit 91 from a main stem 92 and a fruit stem 93 to harvest the fruit individually.

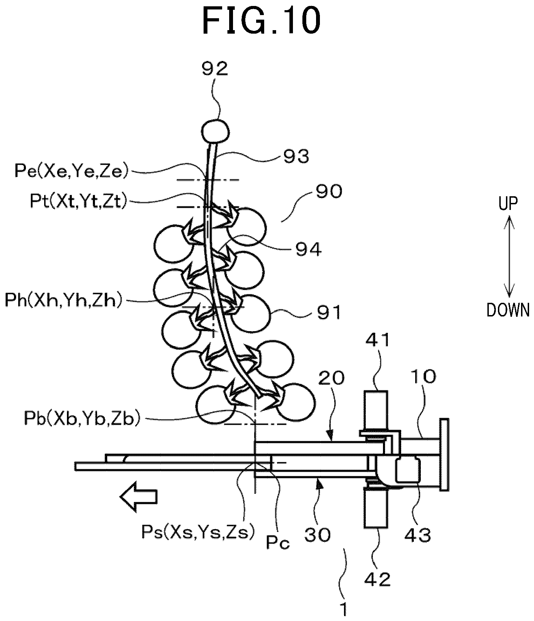

As shown in Fig. 10 also, the harvesting target 91 such as cherry tomatoes is fruited in a state of hanging down from the main stem 92 via the fruit stem 93 and fruit stalks 94. In this case, the fruit stalks 94 are portions connecting between the fruit 91 and the fruit stem 93. Also, the fruit stem 93 is a portion extending from the main stem 92. Cherry tomatoes for merchandise intended for sale in the market are very often grown in plastic greenhouses. In this case, the tip portion of the main stem 92 is suspended on a rail disposed near the ceiling of the plastic greenhouse. Thus, the main stem 92 extends inclining obliquely upward from the ground toward the vicinity of the ceiling.

It should be noted that the harvesting target of the crop harvesting system 50 of the present embodiment is not limited to cherry tomatoes as long as the fruit is in clusters hanging down from the main stems or fruiting mother branches. Also, the harvesting target is not necessarily required to vertically hang down from the main stems or the fruiting mother branches. Furthermore, the harvesting target may be fruit crops growing upward from the main stems or the fruiting mother branches. It should be noted that, in the present embodiment, the main stems and branches are objects to be protected from damage or the like caused by the harvesting work and are technically treated as synonyms.

The crop harvesting system 50 of the present embodiment includes a viewing device 51, a robot arm 52, a transporter 53, and a collection box 54, in addition to the harvester 1. The viewing device 51 is a device capable of acquiring visual information including position information of the harvesting target 91. The viewing device 51 is a device, such as a stereo camera, TOF camera, or structured light scanner, capable of measuring a three-dimensional space and object. It should be noted that TOF refers to time of flight.

In the present embodiment, the visual information acquired by the viewing device 51 also includes position information, contour information, and color information of the harvesting target 91. The visual information acquired by the viewing device 51 also includes position information, contour information, and color information of the main stem 92; however, position information, contour information, and color information of the fruit stem 93 may be or may not be included. Specifically, in the present embodiment, the viewing device 51 acquires the position information, contour information, and color information of the harvesting target 91 and the main stem 92, but does not necessarily have to acquire the position information, contour information, and color information of the fruit stem 93.

In the present embodiment, the viewing device 51 can be mounted to the base member 10 of the harvester 1 via a mounting stay, not shown. In other words, the harvester 1 can be configured with the viewing device 51 included. In this case, the viewing device 51 also moves with the movement of the harvester 1. It should be noted that the viewing device 51 does not necessarily have to be mounted to the harvester 1. The viewing device 51 may be mounted to, for example, the robot arm 52 or may be mounted to the transporter 53. Alternatively, the viewing device 51 may be mounted to, for example, the structure of a plastic greenhouse, not shown, and may always stay in place.

The robot arm 52 may be, for example, a six-axis vertical articulated robot having a plurality of drive shafts, i.e., six in this case. The harvester 1 is mounted to the hand of the robot arm 52. The robot arm 52 is capable of moving the harvester 1 to any position and allowing it to rotate with any postu re.

The transporter 53 is configured to transport the robot arm 52 to which the harvester 1 is mounted, and the collection box 54 to the harvesting target 91. The transporter 53 includes, for example, a motor, not shown, for driving wheels 531, and can move to any position according to external control or the like. The collection box 54 is a box used for placing and collecting the fruit 91 separated from the fruit stem 93 using the harvester 1. The collection box 54 is formed, for example, into a container shape with the top open, and located on the transporter 53. If the facility, such as a plastic greenhouse, is equipped with a device, such as a belt conveyer, for conveying the harvesting target 91, the collection box 54 can be omitted. In place of the collection box 54, a bag or a container may be provided below the harvester 1.

The crop harvesting system 50 includes a harvester controller 55, a viewing device controller 56, a robot arm controller 57, and a transporter controller 58. The harvester controller 55, the viewing device controller 56, the robot arm controller 57, and the transporter controller 58 are devices respectively associated with the harvester 1, the viewing device 51, the robot arm 52, and the transporter 53, i.e., devices dedicated to them, for example, and are provided to the transporter 53, for example.

The harvester controller 55, the viewing device controller 56, the robot arm controller 57, and the transporter controller 58 each mainly include, although not shown, a microcomputer including a CPU, a storage area such as for a ROM, RAM, and rewritable flash memory, and a power circuit for supplying electrical power, as driving force, to the driving units 41, 42 and 43 of the harvester 1, the viewing device 51, the robot arm 52, and the transporter 53. The driving units 41, 42 and 43 of the harvester 1, the viewing device 51, the robot arm 52, and the transporter 53 are driven and controlled based on commands from the respective harvester controller 55, the viewing device controller 56, the robot arm controller 57, and the transporter controller 58.

A control unit 60 controls the harvester 1, the viewing device 51, the robot arm 52, and the transporter 53 via the harvester controller 55, the viewing device controller 56, the robot arm controller 57, and the transporter controller 58, respectively. The control unit 60 is connected to the harvester controller 55, the viewing device controller 56, the robot arm controller 57, and the transporter controller 58, wired or wirelessly, so as to be able to communicate with these controllers. In this case, the control unit 60 may be connected to the harvester controller 55, the viewing device controller 56, the robot arm controller 57, and the transporter controller 58 via, for example, LAN or WAN, or a telecommunication line 100, such as the Internet or a mobile phone line.

As shown in Fig. 7, the control unit 60 is mainly configured to be a microcomputer including, for example, a CPU 601, a storage area 602 such as for a ROM, RAM, and and rewritable flash memory. The control unit 60 issues a drive command to the harvester 1, the viewing device 51, the robot arm 52, or the transporter 53, while receiving feedback from the harvester 1, the viewing device 51, the robot arm 52, or the transporter 53. The control unit 60 is a general-purpose control unit that does not belong to any of the harvester 1, the viewing device 51, the robot arm 52, and the transporter 53. The control unit 60 is a higher-order device that issues a command to the harvester controller 55, the viewing device controller 56, the robot arm controller 57, or the transporter controller 58. The control unit 60 can be configured by, for example, a personal computer or a server.

The storage area 602 stores a program for the crop harvesting system. The control unit 60 executes the program for the crop harvesting system in the CPU 601 to virtually implement a harvesting target detection processor 61, a position information specification processor 62, a moving path generation processor 63, a movement processor 64, a holding processor 65, a placement processor 66, a separation processor 67, and the like in software. The harvesting target detection processor 61, position information specification processor 62, moving path generation processor 63, movement processor 64, holding processor 65, placement processor 66, and separation processor 67 may be implemented, for example, as an integrated circuit that is integrated with the control unit 60 in hardware.

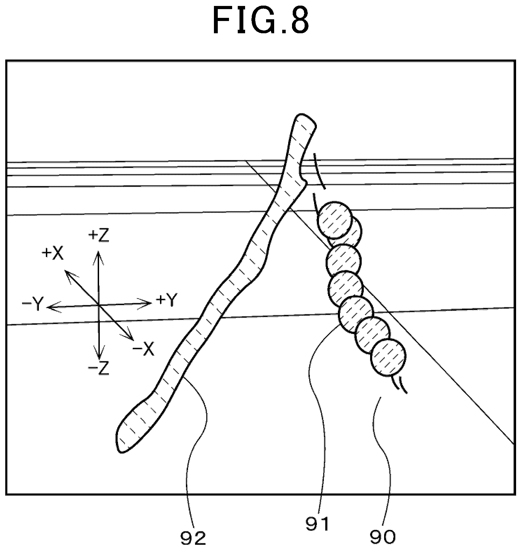

The harvesting target detection processor 61 can execute harvesting target detection processing. The harvesting target detection processing includes processing of detecting whether a harvesting target 91 is present in the field of view of the viewing device 51, based on the visual information acquired by the viewing device 51. In this case, the visual information acquired by the viewing device 51 is configured by, as shown in Fig. 8, point cloud data. The visual information is configured by point cloud arranged on, for example, an X-Y-Z Cartesian coordinate system, and includes RGB color information on each point, and depth information D based on the viewing device 51, i.e., position information in the X-Y-Z Cartesian coordinate system. It should be noted that, in RGB, R refers to red, G refers to green, and B refers to blue. In the case of the example shown in Fig. 8, red is detected for the cherry tomatoes 91 as a harvesting target, and green is detected for the main stem 92. It should be noted that the viewing device 51 may acquire monochrome values as visual information using, for example, an infrared camera.

The harvesting target detection processor 61 can recognize the contour of the harvesting target 91 or the main stem 92 by recognizing the contour of the point cloud. In this case, the fruit stem 93 is thinner than the harvesting target 91 or the main stem 92. Therefore, an attempt to acquire the visual information of the fruit stem 93 may result in increasing hardware cost because the performance or resolution of the viewing device 51 is required to be enhanced. In addition, this may also increase the processing load of the viewing device 51, and the processing load of the control unit 60 using the acquired visual information. In this regard, in the present embodiment, the viewing device 51 is configured not to actively acquire the visual information of the fruit stem 93. Thus, the processing load of the viewing device 51 or the control unit 60 can be reduced.

The harvesting target detection processor 61 extracts, first, point cloud data of the harvesting target 91 having high color values, from the visual information acquired by the viewing device 51. In the present embodiment, the harvesting target detection processor 61 extracts point cloud data with high red values corresponding to the cherry tomatoes 91. Then, for example, if there is a point cloud with high red values over a predetermined range in the acquired visual information, the harvesting target detection processor 61 determines that the acquired visual information includes a harvesting target 91, i.e., there are cherry tomatoes 91 as a harvesting target in the field of view of the viewing device 51.

On the other hand, if there is a point cloud with high red values only in the predetermined range in the acquired visual information, the harvesting target detection processor 61 determines that the acquired visual information includes no harvesting target 91, i.e., there are no cherry tomatoes 91 as a harvesting target in the field of view of the viewing device 51. Thus, the harvesting target detection processor 61 recognizes the point cloud with high red values in the acquired visual information as cherry tomatoes 91 that is the harvesting target. It should be noted that the harvesting target detection processor 61 may be configured to recognize the harvesting target 91 or the main stem 92, based on the information on the point cloud arranged on the X-Y-Z Cartesian coordinate system, i.e., three-dimensional point cloud information, included in the visual information, or based on monochrome values obtained using an infrared camera.

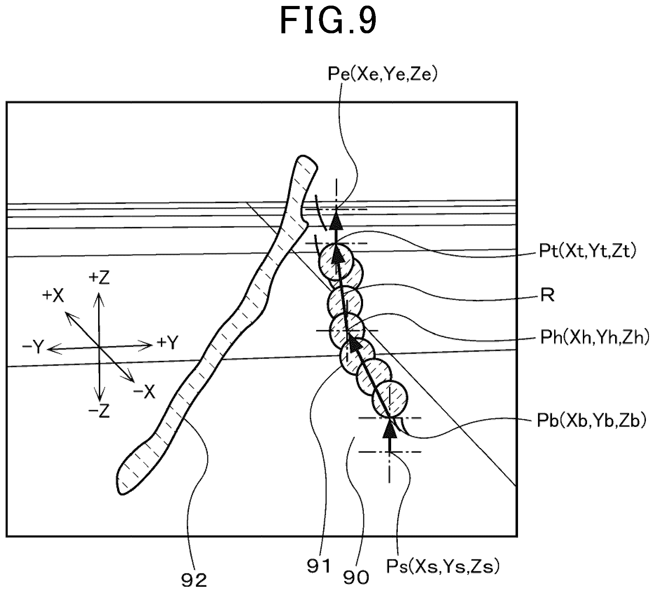

The position information specification processor 62 can execute position specification processing. As shown in Fig. 9, the position specification processing includes processing of specifying the position of the harvesting target 91, including a tip position Pb (Xb, Yb, Zb) and a base position Pt (Xt, Yt, Zt) of the harvesting target 91, from the visual information acquired by the viewing device 51. In the present embodiment, the tip position Pb (Xb, Yb, Zb) refers to a tip-side position of the harvesting target 91 as a whole based on the main stem 92, that is, an end farthest from the main stem 92 in the harvesting target 91 as a whole. Also, the base position Pt (Xt, Yt, Zt) refers to a base-side position of the harvesting target 91 as a whole based on the main stem 92, that is, an end closest to the main stem 92 in the harvesting target 91 as a whole.

In this case, an outer side of the tip position Pb (Xb, Yb, Zb) refers to an outer side of the harvesting target 91 as a whole with respect to the tip position Pb (Xb, Yb, Zb), i.e., a direction away from the main stem 92 with respect to the tip position Pb (Xb, Yb, Zb). Also, an outer side of the base position Pt (Xt, Yt, Zt) refers to an outer side of the harvesting target 91 as a whole with respect to the base position Pt (Xt, Yt, Zt), i.e., a direction approaching the main stem 92 with respect to the base position Pt (Xt, Yt, Zt).

The harvesting target 91 such as cherry tomatoes hangs down from the main stem 92. Therefore, in this case, the tip position Pb (Xb, Yb, Zb) corresponds to a lower end position of the harvesting target 91, and the base position Pt (Xt, Yt, Zt) corresponds to an upper end position thereof. The following description will be provided with the tip position Pb (Xb, Yb, Zb) of the harvesting target 91 referred to as a lower end position Pb (Xb, Yb, Zb), and the base position Pt (Xt, Yt, Zt) thereof referred to as an upper end position Pt (Xt, Yt, Zt). In this case, the outer side of the tip position Pb (Xb, Yb, Zb) refers to a lower side of the lower end position Pb (Xb, Yb, Zb), and the outer side of the base position Pt (Xt, Yt, Zt) refers to an upper side of the upper end position Pt (Xt, Yt, Zt).

The position information specification processor 62 extracts a point where the Z value is minimum from the point cloud data of the harvesting target 91, i.e., the point cloud data with high red values, detected by the harvesting target detection processor 61 to specify the lower end position Pb (Xb, Yb, Zb) of the harvesting target 91, and also extracts a point where the Z value is maximum therefrom to specify the upper end position Pt (Xt, Yt, Zt) of the harvesting target 91.

When the lower end position Pb (Xb, Yb, Zb) and the upper end position Pt (Xt, Yt, Zt) are specified actually using only the data of the lowermost point where the Z value is minimum and the uppermost point where the Z value is maximum, deviation is likely to occur in the coordinates of the lower end position Pb (Xb, Yb, Zb) and the upper end position Pt (Xt, Yt, Zt) if noise or the like is mixed in the visual information acquired by the viewing device 51. In this regard, in the present embodiment, the position information specification processor 62 calculates an average value of the point cloud data of the lowermost point where the Z value is minimum and the point cloud data in a predetermined range of the Z value in the positive direction from the lowermost point, e.g., in the range of 20 mm upward, from among the point cloud data of the harvesting target 91, i.e., the point cloud data with high red values, detected by the harvesting target detection processor 61, and uses the calculated average value as a lower end position Pb (Xb, Yb, Zb).

Similarly, the position information specification processor 62 calculates an average value of the point cloud data of the uppermost point where the Z value is maximum and the point cloud data in a predetermined range of the Z value in the negative direction from the uppermost point, e.g., in the range of 20 mm downward, from among the point cloud data of the harvesting target 91, i.e., the point cloud data with high red values, detected by the harvesting target detection processor 61, and uses the calculated average value as an upper end position Pt (Xt, Yt, Zt).

The position information specification processor 62 can further execute processing of specifying an intermediate position Ph (X, Y, Z) which is a halfway position between the lower end position Pb (Xb, Yb, Zb) and upper end position Pt (Xt, Yt, Zt) of the harvesting target 91. The position information specification processor 62 acquires, for example, a coordinate of an intermediate position in the Z direction between the lower end position Pb (Xb, Yb, Zb) and upper end position Pt (Xt, Yt, Zt) as an intermediate position Ph (X, Y, Z).

In this case, the Z value of the intermediate position Ph (X, Y, Z) is an average value of the Z value of the lower end position Pb (Xb, Yb, Zb) and the Z value of the upper end position Pt (Xt, Yt, Zt), i.e., Ph(Z) = (lower end position Pb(Z) + upper end position Pt(Z))/2. The X value and the Y value of the intermediate position Ph (X, Y, Z) are each an average value in Ph(Z). It should be noted that a plurality of intermediate positions Ph (X, Y, Z) can be set. In this case, if the number of the intermediate positions Ph is N, Ph(Z) = (lower end position Pb(Z) + upper end position Pt(Z)) / (N+1).

In the position specification processing, the position information specification processor 62 can specify the position information of the harvesting target 91, i.e., the lower end position Pb (Xb, Yb, Zb), upper end position Pt (Xt, Yt, Zt), and intermediate position Ph (X, Y, Z) in this case, without using the position information of the fruit stem 93 connected to the harvesting target 91.

Furthermore, as shown in Fig. 8 and other figures, the harvesting target detection processor 61 can acquire visual information of the main stem 92, i.e., shape and color information of the main stem 92 including the position information thereof in this case, from the visual information acquired by the viewing device 51. Similarly to the harvesting target 91, the harvesting target detection processor 61 extracts point cloud data with high green values corresponding to the color of the main stem 92 from the visual information acquired by the viewing device 51. Then, for example, if there is a point cloud with high green values over a predetermined range in the acquired visual information, the harvesting target detection processor 61 recognizes the point cloud with high green values to be the main stem 92.

The moving path generation processor 63 can execute moving path generation processing. The moving path generation processing includes processing of generating a moving path R of the harvester 1 from a start position Ps (Xs, Ys, Zs) to an end position Pe (Xe, Ye, Ze) through the lower end position Pb (Xb, Yb, Zb) and upper end position Pt (Xt, Yt, Zt) of the harvesting target 91. In this case, the start position Ps (Xs, Ys, Zs) can be set at a position that is a predetermined distance directly below the lower end position Pb (Xb, Yb, Zb) of the harvesting target 91, e.g., a position several tens of millimeters below. Also, the end position Pe (Xe, Ye, Ze) can be set at a position that is a predetermined distance directly above the upper end position Pt (Xt, Yt, Zt) of the harvesting target 91, e.g., a position several tens of millimeters above.

As shown in Fig. 9, the moving path generation processor 63 generates the moving path R of the harvester 1 so as to pass through the intermediate position Ph (X, Y, Z). In this case, the moving path R of the harvester 1 is a path obtained by sequentially linearly connecting the positions adjacent in the Z direction, i.e., the start position Ps (Xs, Ys, Zs), the lower end position Pb (Xb, Yb, Zb), the intermediate position Ph (X, Y, Z), the upper end position Pt (Xt, Yt, Zt), and the end position Pe (Xe, Ye, Ze).

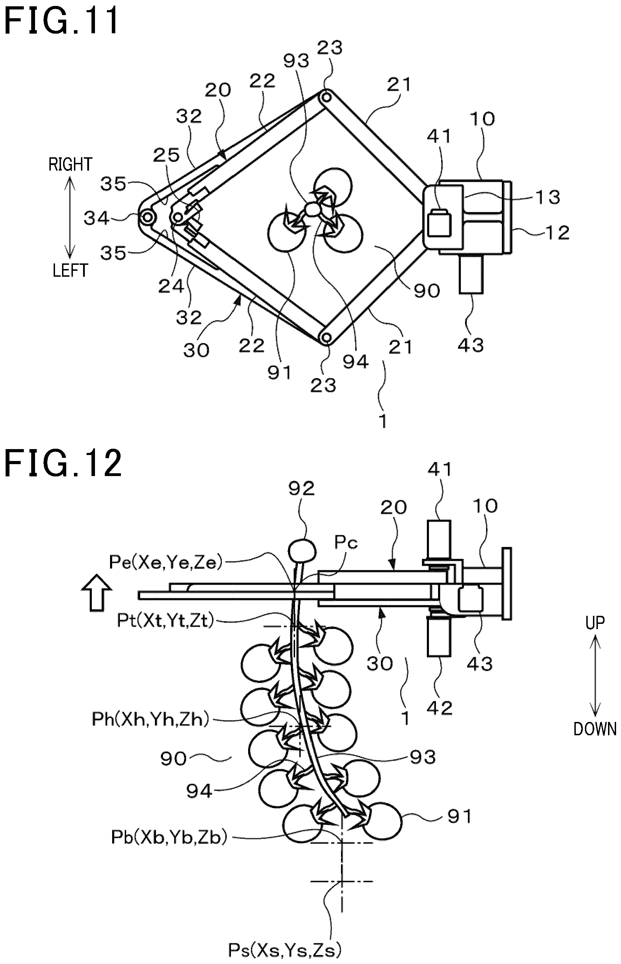

The movement processor 64 can execute movement processing. The movement processing includes processing of driving and controlling the first and second driving units 41 and 42 via the harvester controller 55 to bring the holding mechanism 20 and the separation mechanism 30 into an open state as shown in Fig. 11. Also, the movement processing includes processing of driving and controlling the robot arm 52 via the robot arm controller 57 and, as shown in Figs. 10 and 12, moving the harvester 1 along the moving path R to move the harvester 1 to the base side of the fruit stem 93, while allowing the entire bunch 90 to pass through the region inside the holding mechanism 20 and the separation mechanism 30 which are open. Specifically, the movement processor 64 executes processing of allowing the entire bunch 90 to pass through the region inside the holding mechanism 20 and the separation mechanism 30, while scooping up the entire bunch 90 from the bottom to the top.

In this case, the harvester 1 side reference is set at, for example, a reference point Pc shown in Fig. 1. The reference point Pc can be set at any position in the inner region of the holding mechanism 20 and the separation mechanism 30 in an open state. In the present embodiment, the reference point Pc is virtually set at, for example, the center position of the inner region of the holding mechanism 20 and the separation mechanism 30 in an open state. The movement processor 64 drives and controls the robot arm 52 via the robot arm controller 57 so that the reference point Pc traces the moving path R.

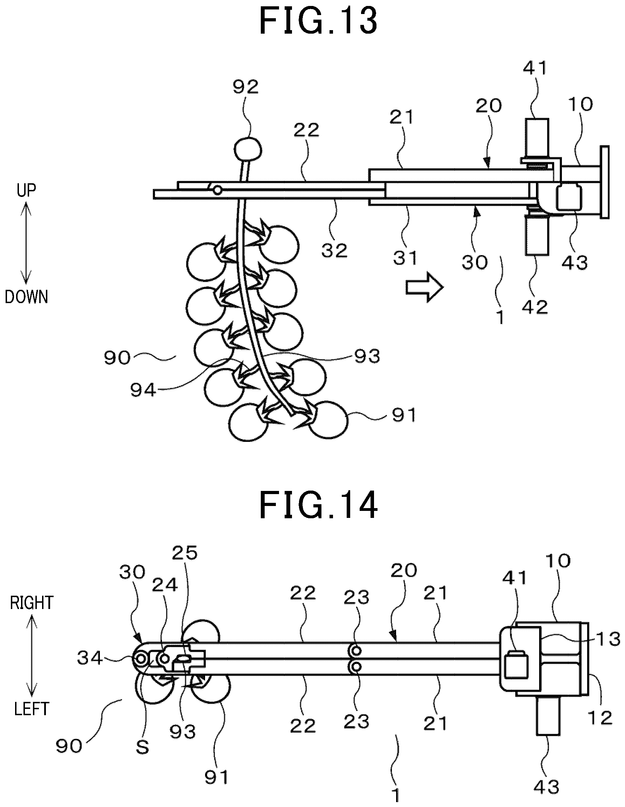

The holding processor 65 can execute holding processing. The holding processing includes processing of driving the first driving unit 41 via the harvester controller 55 to close the holding mechanism 20, so that the fruit stem 93 is pinched and held between holding parts 25 of the holding mechanism 20. In the present embodiment, as shown in Figs. 1 and 2, the positions of the holding parts 25 greatly move back and forth with opening and closing of the holding mechanism 20. Therefore, in the present embodiment, the holding processing includes, as shown in Fig. 13, processing of driving the robot arm 52 via the robot arm controller 57 to pull the harvester 1 toward the robot arm 52. Thus, when the state of the holding mechanism 20 is switched to the closed state, the fruit stem 93 is ensured to be positioned inside the holding parts 25.

As shown in Figs. 13 and 14, as a result of executing the holding processing, the holding mechanism 20 holds the base portion of the fruit stem 93, i.e., the main stem 92 side portion of the fruit stem 93 further than the entire fruit 91. The holding processing includes processing of holding the base-side portion, i.e., the main stem 92 side portion, of the fruit stem 93 further than the separation mechanism 30, while the separation mechanism 30 is moved by execution of the separation processing described later.

The placement processor 66 can execute placement processing. The placement processing includes processing of driving the second driving unit 42 via the harvester controller 55 to close the separation mechanism 30 to form the gap S on the inside of the gap forming parts 35, and placing the fruit stem 93 inside the gap S such that the base-side portion, i.e., the main stem 92 side portion, thereof is located inside the gap S.

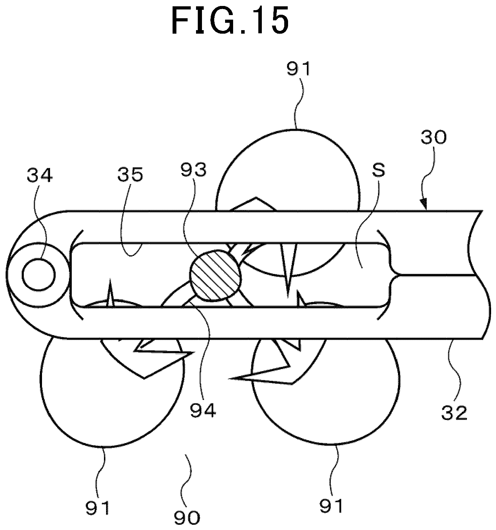

In the present embodiment, as shown in Figs. 1 and 2, the positions of the gap forming parts 35 greatly move back and forth with opening and closing of the separation mechanism 30. Therefore, in the present embodiment, the placement processing includes, as shown in Fig. 13, driving the robot arm 52 via the robot arm controller 57 and pulling the harvester 1 toward the robot arm 52 as in the holding processing. Thus, as shown in Fig. 15, when the state of the separation mechanism 30 is switched to the closed state, the fruit stem 93 is ensured to be positioned inside the gap forming parts 35. As a result of executing the placement processing, the separation mechanism 30 places the base portion of the fruit stem 93, i.e., the main stem 92 side portion of the fruit stem 93 further than the entire fruit 91, on the inside of the gap forming parts 35, i.e., inside the gap S.

It should be noted that the holding processing and the placement processing described above may be simultaneously or substantially simultaneously started. Alternatively, the placement processing may be started after start of the holding processing, or conversely, the holding processing may be started after start of the placement processing. However, while the separation processing is executed, the holding processing is maintained to hold the fruit stem 93 with the holding mechanism 20.

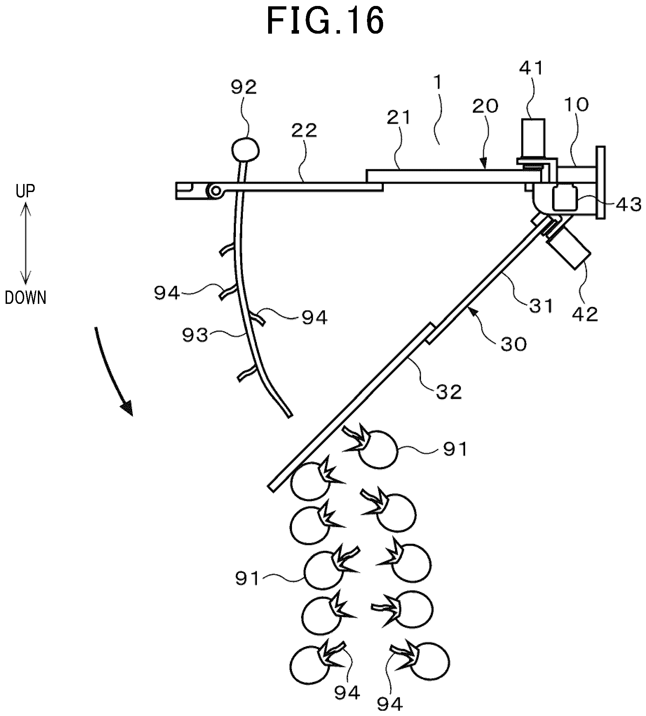

The separation processor 67 can execute separation processing. The separation processing is executed following the holding processing and the placement processing. As shown in Fig. 16, the separation processing includes processing of driving t he first driving unit 41 via the harvester controller 55 to move the separation mechanism 30 in the direction away from the holding mechanism 20, i.e., toward tip side of the fruit stem 93, so that the fruit 91 is separated from fruit stalks 94 connecting the fruit 91 to the fruit stem 93, or the fruit 91 is separated from the fruit stem 93 together with the fruit stalks 94. The fruit 91 separated from the fruit stem 93 by the separation processing falls in and collected by the collection box 54, for example.

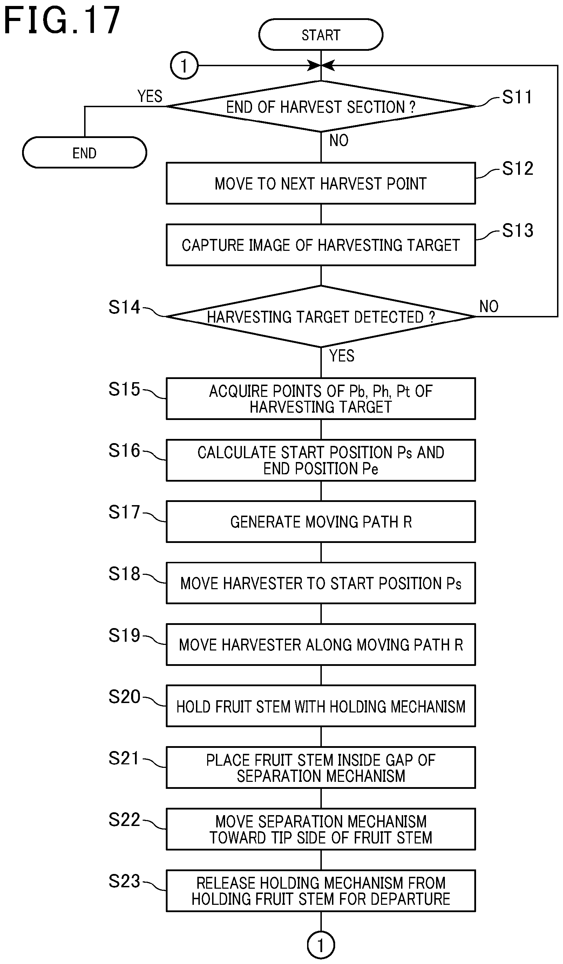

Next, referring to the flowchart shown in Fig. 17, a series of control of the harvesting operation for harvesting the harvesting target 91 executed by the crop harvesting system 50 will be described. It should be noted that, in the following description, the subject of the processing executed by the processors 61 to 67 is assumed to be the control unit 60. In the present embodiment, a harvest section is set along the main stem 92. The transporter 53 moves along the main stem 92 and sequentially harvests the harvesting target 91 which is borne on the main stem 92.

In the flowchart of Fig. 17, the processing of steps S13 and S14 is an example of the harvesting target detection processing. The processing of step S15 is an example of the position specification processing. The processing of steps S16 and S17 is an example of the moving path generation processing. The processing of steps S18 and S19 is an example of the movement processing. The processing of step S20 is an example of the holding processing. The processing of step S21 is an example of the placement processing. The processing of step S23 is an example of the separation processing.

First, at step S11, the control unit 60 specifies the current position of the transporter 53 based on the information received from the transporter controller 58, and determines whether the current position of the transporter 53 is the end of the harvest section. If the current position of the transporter 53 is the end of the harvest section (YES at step S11), the control unit 60 determines that there is no subsequent harvesting target 91 and terminates the series of control. On the other hand, if the current position of the transporter 53 is not the end of the harvest section (NO at step S11), the control unit 60 determines that there is still harvesting target 91. Then, the control unit 60 allows processing to proceed to step S12, drives the transporter 53 via the transporter controller 53, and moves the transporter 53 to the next harvest point.

Next, at steps S13 and S14, the control unit 60 executes the harvesting target detection processing. At step S13, the control unit 60 drives the viewing device 51 via the viewing device controller 56, and captures an image of the harvesting target 91. Then, at step S14, the control unit 60 determines whether the harvesting target 91 is included in the visual information, i.e., image information in this case, which is an image captured by the viewing device 51.

If no harvesting target 91 is detected at step S14 (NO at step S14), the control unit 60 drives the transporter 53 to move it to the next harvest point. On the other hand, if a harvesting target 91 is detected at step S14 (YES at step S14), the control unit 60 allows processing to proceed to step S15. The control unit 60 executes the position specification processing at step S15 to specify the lower end position Pb (Xb, Yb, Zb), the upper end position Pt (Xt, Yt, Zt), and the intermediate position Ph (X, Y, Z) of the harvesting target 91 based on the visual information acquired by the viewing device 51.

Next, at steps S16 and S17, the control unit 60 executes the moving path generation processing. First, the control unit 60 calculates, at step S16, a start position Ps (Xs, Ys, Zs) and an end position Pe (Xe, Ye, Ze) based on the lower end position Pb (Xb, Yb, Zb) and upper end position Pt (Xt, Yt, Zt) specified at step S15. Next, the control unit 60 allows processing to proceed to step S17 to generate a moving path R of the harvester 1 from the start position Ps (Xs, Ys, Zs) to the end position Pe (Xe, Ye, Ze) through the lower end position Pb (Xb, Yb, Zb) and upper end position Pt (Xt, Yt, Zt) of the harvesting target 91.

Next, the control unit 60 executes the movement processing at steps S18 and S19 to drive the robot arm 52 via the robot arm controller 57. In this case, at step S18 first, the control unit 60 moves the harvester 1 so that the reference point Pc of the harvester 1 matches the start position Ps (Xs, Ys, Zs), i.e., as shown in Fig. 11, the entire bunch 90 is placed, in plan view, in the region inside the holding mechanism 20 and the separation mechanism 30 which are open. Then, at step S19, the control unit 60 moves the harvester 1 to the end position Pe (Xe, Ye, Ze), as shown in Figs. 10 and 12, while allowing the reference point Pc of the harvester 1 to trace the moving path R.

Thus, the harvester 1 is moved scooping up the entire bunch 90 from below in the region inside the holding mechanism 20 and the separation mechanism 30 which are open, and is resultantly moved to a position beyond the entire fruit 91. In this case, the fruit stem 93 connecting the fruit 91 to the main stem 92 is present in the region inside the holding mechanism 20 and the separation mechanism 30 which are open. The fruit 91 and the main stem 92 are respectively positioned on the lower outer side and the upper outer side with respect to the holding mechanism 20 and the separation mechanism 30.

Next, at step S20 of Fig. 17, the control unit 60 executes the holding processing to switch the state of the holding mechanism 20 to the closed state to thereby hold the fruit stem 93. The control unit 60 executes the placement processing of step S21 simultaneously or substantially simultaneously with the start of the holding processing at step S20. As shown in Fig. 15, as a result of executing the placement processing, the base portion of the fruit stem 93, i.e., the main stem 92 side portion of the fruit stem 93 further than the entire fruit 91, is placed inside the gap forming parts 35, i.e., inside the gap S.

Thereafter, the control unit 60 executes the separation processing at step S21 of Fig. 17. The control unit 60 maintains the holding processing while the separation processing is executed. As shown in Fig. 16, through execution of the separation processing, the control unit 60 moves the separation mechanism 30 in the direction away from the holding mechanism 20, i.e., toward the tip side of the fruit stem 93. Thus, the separation mechanism 30 is pivotably rotated toward the tip side of the fruit stem 93, with the peripheries of the gap forming parts 35 being brought into contact with the fruit 91 or the fruit stalks 94, so that the fruit 91 is separated from the fruit stalks 94 that connect the fruit 91 to the fruit stem 93, or the fruit 91 is separated from the fruit stem 93 together with the fruit stalks 94. Consequently, the fruit 91 can be individually harvested in a state of being separated from the fruit stem 93.

Thereafter, at step S23, the control unit 60 drives the first driving unit 41 via the harvester controller 55 to switch the state of the holding mechanism 20 to the open state to release the holding mechanism 20 from holding the fruit stem 93. Then, the control unit 60 drives the robot arm 52 via the robot arm controller 57 to move the harvester 1 toward the tip side of the fruit stem 93 for departure from the fruit stem 93. Furthermore, the control unit 60 drives the second driving unit 42 via the harvester controller 55 to switch the state of the separation mechanism 30 to the open state, while driving the third driving unit 43 to return the separation mechanism 30 to the initial position. Thereafter, the control unit 60 drives the robot arm 52 via the robot arm controller 57 to return the harvester 1 to the initial position, i.e., the position where the transporter 53 is driven, and allows processing to return to step S11 to harvest the next harvesting target 91.

The crop harvesting method according to the embodiment described above is a harvesting method in which the fruit 91 in the bunch 90 is individually harvested being separated from the fruit stem 93. This crop harvesting method includes the placement processing and the separation processing. In the placement processing, the separation mechanism 30 in which the predetermined gap S is formed is placed so that the base-side portion of the fruit stem 93 is positioned inside the gap S. In the separation processing, which is executed following the placement processing, the separation mechanism 30 is moved toward the tip side of the fruit stem 93 to separate the fruit 91 from the fruit stalks 94 that connect the fruit 91 to the fruit stem 93, or to separate the fruit 91 from the fruit stem 93 together with the fruit stalks 94.

With this configuration, since multiple pieces of fruit 91 in the bunch 90 can be individually separated and harvested in one operation, the harvesting target 91 in the bunch 90 can be individually harvested with high efficiency in a short time.

Furthermore, according to the present embodiment, when configuring the crop harvesting system 50 that automatically performs harvesting using the viewing device 51, for example, the viewing device 51 only needs to recognize the entire bunch 90 or the main stem 92, and does not necessarily have to recognize all the fruit 91 individually. Therefore, comparing to the case where the fruit 91 is individually recognized and harvested, the recognition accuracy of the viewing device 51 can be reduced. Consequently, the advanced control for individually recognizing and harvesting the fruit 91 is not required, and thus the control configuration can be simplified, resultantly reducing the load of control.

In the case of a configuration in which, for example, harvesting is performed by cutting off the fruit stem 93 using a scissors-shaped end effector, the cutting edges of the scissors-shaped end effector may contact the main stem 92 or branch when the end effector is moved, and may damage the main stem 92 or branch, or cut it off in worse. Damaging or cutting off the main stem or branch may cause various plant diseases, or in worse, may kill the plant, which may lead to a subsequent decline in yield.

In contrast, according to the present embodiment, the fruit 91 can be separated from the fruit stem 93 and harvested without using a cutter, and therefore, the main stem 92 or branch is prevented from being damaged or cut off. Consequently, plant diseases can be suppressed and fruit is prevented from being reduced, and harvesting efficiency can be greatly improved.

Since the separation mechanism 30 is moved while being in contact with the fruit 91 or the fruit stalks 94 by executing the separation processing, the movement generates a force of pulling the fruit 91 apart from the fruit stalks 94 or pulling the fruit stalks 94 apart from the fruit stem 93, as a result of which the fruit 91 is separated from the fruit stem 93. However, if the force applied to the fruit 91 from the separation mechanism 30 when executing the separation processing is transmitted to the main stem 92 via the fruit stem 93, the main stem 92 may bend with the movement of the separation mechanism 30. Then, the bunch 90 including the fruit stem 93 may move together with the separation mechanism 30, and thus the force of pulling the fruit 91 apart from the fruit stalks 94, or the force of pulling the fruit stalks 94 from the fruit stem 93, is unlikely to be generated, as a result of which the fruit 91 is unlikely to be separated from the fruit stem 93.

In this regard, the crop harvesting device 1 of the present embodiment further includes the holding mechanism 20. The holding mechanism 20 is provided on the base side, i.e., the main stem 92 side, of the fruit stem 93 with respect to the separation mechanism 30, and is configured to hold the fruit stem 93. The crop harvesting method of the present embodiment further includes the holding processing. In the holding processing, the base-side portion, i.e., the main stem 92 side portion, of the fruit stem 93 further than the separation mechanism 30 is held during the movement of the separation mechanism 30.

With this configuration, the main stem 92 is prevented from being bent with the movement of the separation mechanism 30 when executing the separation processing, which would otherwise occur due to the force applied to the fruit 91 or fruit stalks 94 from the separation mechanism 30 being transmitted to the main stem 92 via the fruit stem 93. Thus, the force of pulling the fruit 91 apart from the fruit stalks 94, or the force of pulling the fruit stalks 94 apart from the fruit stem 93, generated during the separation processing can reliably act on the fruit 91 or the fruit stalks 94. Consequently, the fruit 91 can be reliably separated from the fruit stem 93 and the work efficiency can be further improved.

The crop harvesting device 1 of the present embodiment includes the separation mechanism 30. The separation mechanism 30 is configured to switch between an open state and a closed state. The open state refers to a state in which the separation mechanism 30 is open larger than the outer diameter of the entire bunch 90 so that the entire bunch 90 can be inserted inside the separation mechanism 30. The closed state refers to a state in which the separation mechanism 30 is closed to form the gap S on the inside of the separation mechanism 30.

The crop harvesting method of the present embodiment further includes the movement processing. In the movement processing, which is executed preceding the placement processing, the separation mechanism 30 is brought into the open state and moved toward the base side of the fruit stem 93 from the tip side thereof, while the entire bunch 90 is permitted to pass through the separation mechanism 30. The placement processing includes the processing of switching the state of the separation mechanism 30 to the closed state.

With this configuration, the entire bunch 90 can be easily placed inside the separation mechanism 30 by bringing the separation mechanism 30 into the open state when executing the movement processing. This can eliminate fine and advanced control when executing the movement processing and thus the control configuration can be simplified, as a result of which the load of control can be reduced.

In the crop harvesting device 1 of the present embodiment, the separation mechanism 30 is a link mechanism configured using members having rigidity. In this case, the separation mechanism 30 is configured using two first separation link members 31 and two second separation link members 32. This can simplify the configuration comparing to, for example, a device that cuts off the fruit stem 93 or the fruit stalks 94 using a cutter.

The crop harvesting system 50 of the present embodiment includes the viewing device 51 and the robot arm 52. The viewing device 51 is configured to acquire visual information including position information of the harvesting target 91. The harvester 1 is mounted to the robot arm 52. The crop harvesting system 50 includes the harvesting target detection processor 61, the position information specification processor 62, the moving path generation processor 63, the movement processor 64, and the placement processor 66.

The harvesting target detection processor 61 can execute harvesting target detection processing. The harvesting target detection processing includes processing of detecting a harvesting target included in the visual information acquired by the viewing device 51. The position information specification processor 62 can execute position specification processing. The position specification processing includes processing of specifying the position of the harvesting target 91 including the lower end position Pb (Xb, Yb, Zb) and the upper end position Pt (Xt, Yt, Zt) of the harvesting target 91. The moving path generation processor 63 can execute moving path generation processing. The moving path generation processing includes processing of generating a moving path R of the harvester 1 from the start position Ps (Xs, Ys, Zs) located below the lower end position Pt (Xt, Yt, Zt) of the harvesting target 91 to the end position Pe (Xe, Ye, Ze) located above the upper end position Pt (Xt, Yt, Zt) thereof.

The movement processor 64 can execute movement processing. The movement processing includes processing of driving and controlling the robot arm 52 to move the harvester 1 along the moving path R generated through the moving path generation processing, and passing the harvesting target 91 that is the entire bunch 90 through the separation mechanism 30 which is open. The separation processor 67 can execute separation processing. In the separation processing, which is executed following the placement processing, the robot arm 52 is driven and controlled to move the harvester 1 toward the tip side of the fruit stem 93 to thereby separate the fruit 91 from the fruit stalks 94 that connect the fruit 91 to the fruit stem 93, or separate the fruit 91 from the fruit stem 93 together with the fruit stalks 94.

With this configuration, the harvesting target 91 hanging down from the main stem 92 or branch via the fruit stem 93 can be automatically and individually harvested using the harvester 1, preventing the main stem 92 or the harvesting target 91 from being damaged as much as possible, and thus the efficiency of harvest work can be greatly improved.

The position information specification processor 62 specifies the position of the harvesting target 91 in the position specification processing without using the position information of the fruit stem 93 connected to the harvesting target 91. Specifically, the control unit 60 does not perform processing of recognizing the fruit stem 93 when operating the robot arm 52 based on the visual information from the viewing device 51. Specifically, using the harvester 1, the fruit 91 that is the harvesting target can be individually harvested without performing processing of visually recognizing the fruit stem 93.

### (Second Embodiment)

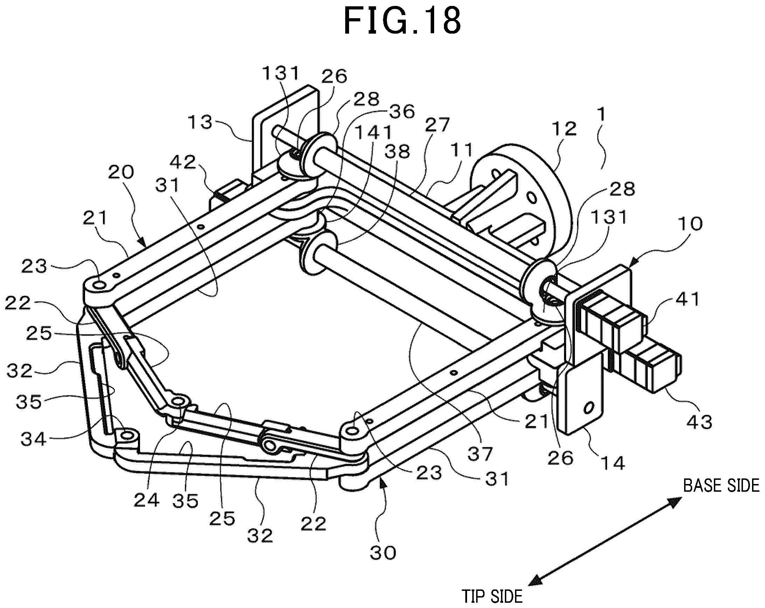

Next, referring to Figs. 18 to 21, a second embodiment will be described.

In the first embodiment described above, the base-side joint parts of the two first holding link members 21 in the holding mechanism 20 are provided at positions close to each other. Similarly, in the first embodiment, the base-side joint parts of the two first separation link members 31 in the separation mechanism 30 are provided at positions close to each other.

In contrast, as shown in Figs. 18 to 21, in the second embodiment, the base-side joint parts of the two first holding link members 21 in the holding mechanism 20 are provided at positions away from each other. Also, as shown in Figs. 18 to 21, base-side joint parts 36 of the two first separation link members 31 in the separation mechanism 30 are provided at positions away from each other.

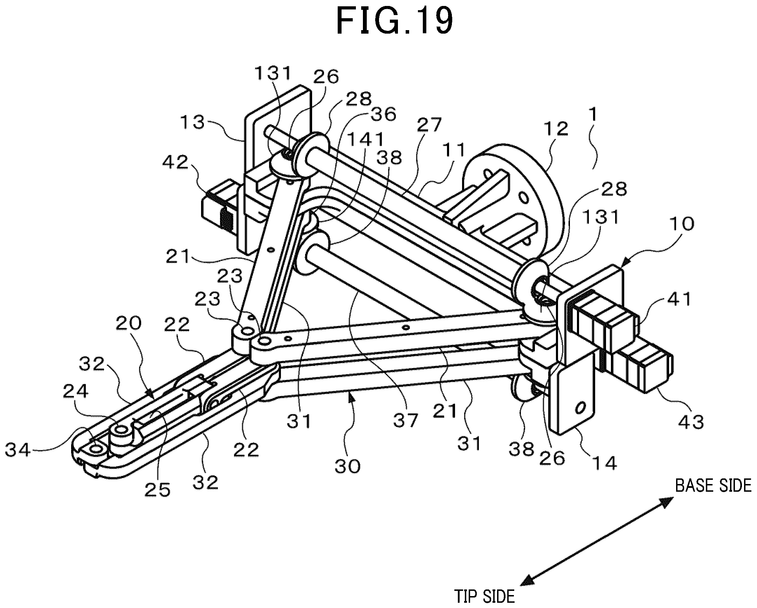

In this case, as shown in Fig. 19, base-side joint parts 26 corresponding to the two first holding link members 21 are provided at respective positions such that the inner surfaces of the two first holding link members 21 are not brought into entire contact with each other when the two first holding link members 21 are pivotably rotated in the direction in which they come close to each other. Specifically, the base-side joint parts 26 of the first holding link members 21 are provided at respective positions not allowing the inner surfaces of these members to come into entire contact with each other in the closed state. In this case, the driving force of the first driving unit 41 is transmitted to the base-side joint parts 26 corresponding to the two first holding link members 21 via a shaft 27 and gears 28. As in the first embodiment, the holding mechanism 20 with this configuration can also switch between the open state shown in Fig. 18 and the closed state shown in Fig. 19.

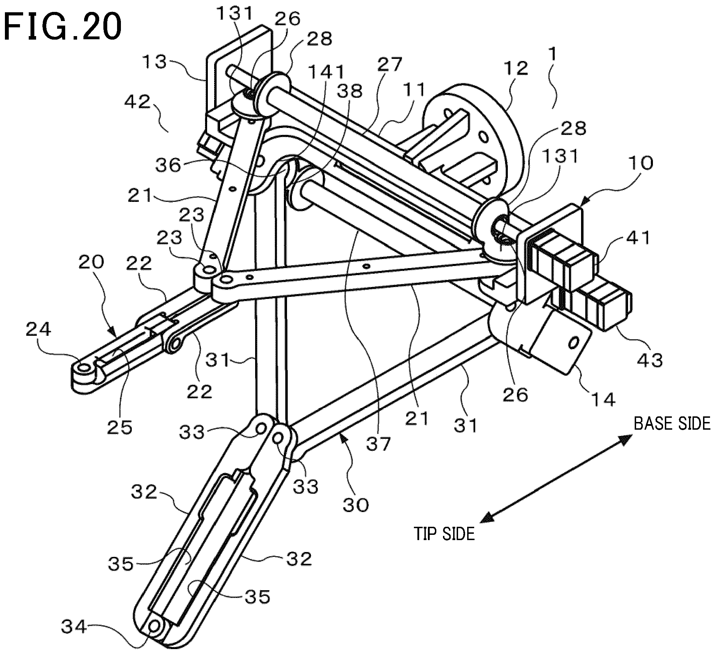

Similarly, as shown in Fig. 19, base-side joint parts 36 corresponding to the two first separation link members 31 are provided at respective positions such that the inner surfaces of the two first separation link members 31 are not brought into entire contact with each other when these members are pivotably rotated in the direction in which they come close to each other. Specifically, the base-side joint parts of the first separation link members 31 are provided at respective positions not allowing the inner surfaces of these members to come into entire contact with each other in the closed state. In this case, the driving force of the second driving unit 42 is transmitted to the base-side joint parts 36 corresponding to the two first separation link members 31 via a shaft 37 and gears 38. As in the first embodiment, the separation mechanism 30 with this configuration can also switch between the open state shown in Fig. 18 and the closed state shown in Fig. 19. Furthermore, as shown in Fig. 20, the separation mechanism 30 with this configuration can also be pivotably rotated in the direction away from or approaching the holding mechanism 20.

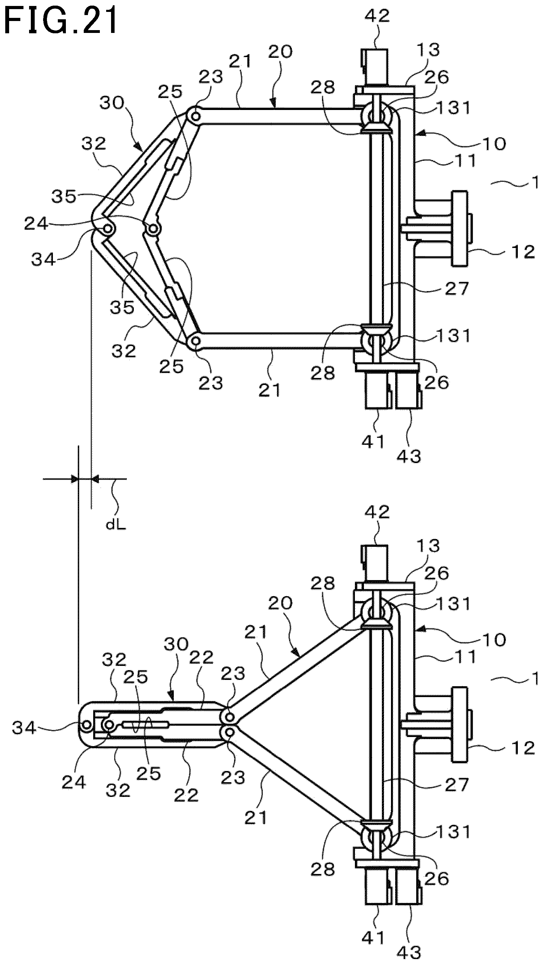

In the present embodiment, advantageous effects similar to those of the first embodiment can be achieved. According to the present embodiment, as shown in Fig. 21, position variation dL can be reduced at the tip portion of the holding mechanism 20 or the separation mechanism 30 between the open state and the closed state. According to the present embodiment, the following advantageous effects can be achieved by reducing the variation dL at the tip position between the open state and the closed state.

First, according to the present embodiment, the variation dL at the tip position does not change greatly between the open state and the closed state. Specifically, according to the present embodiment, there is no great change in positional relationship between the holding parts 25 and the fruit stem 93 accompanying the opening and closing of the holding mechanism 20, and between the gap forming parts 35 and the fruit stem 93 accompanying the opening and closing of the separation mechanism 30. Therefore, unlike the first embodiment, there is no need to move the harvester 1 to a great extent toward the robot arm 52 by driving the robot arm 52 as shown in Fig. 13 when executing the holding processing and the placement processing, as a result of which control can be simplified.

Furthermore, according to the present embodiment, the entire length of the harvester 1 can be made shorter in the open and closed states of the separation mechanism 30 than in the configuration of the first embodiment. Therefore, the torque for moving the separation mechanism 30 in the direction away from or approaching the holding mechanism 20 can be reduced, which leads to reducing the size or output of the third driving unit 43.

In the case of providing a bag, container, or the like for receiving the harvested fruit 91 under the separation mechanism 30 in the configuration of the first embodiment, the shape of the bag or container unavoidably becomes complicated and large because the entire length of the separation mechanism 30 greatly changes between the case of executing the placement processing and the the case of executing the separation processing. In this regard, according to the present embodiment, the entire length of the separation mechanism 30 does not greatly change between the case of executing the placement processing and the the case of executing the separation processing. Therefore, the shape of the bag or container for receiving the fruit 91 can be simplified.

### (Third Embodiment)

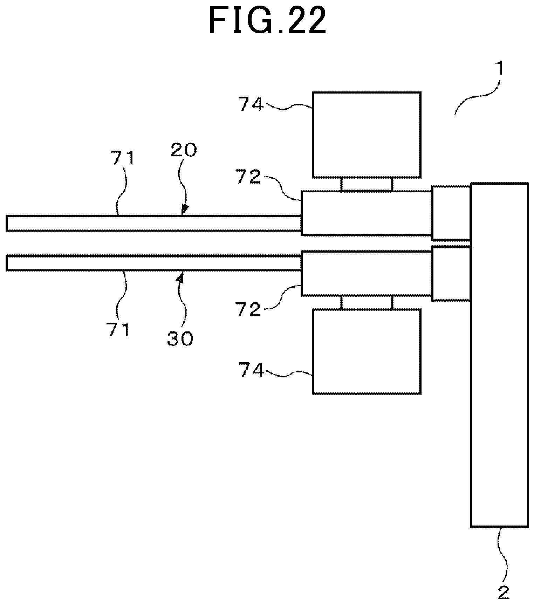

Next, referring to Figs. 22 to 30, a third embodiment will be described.

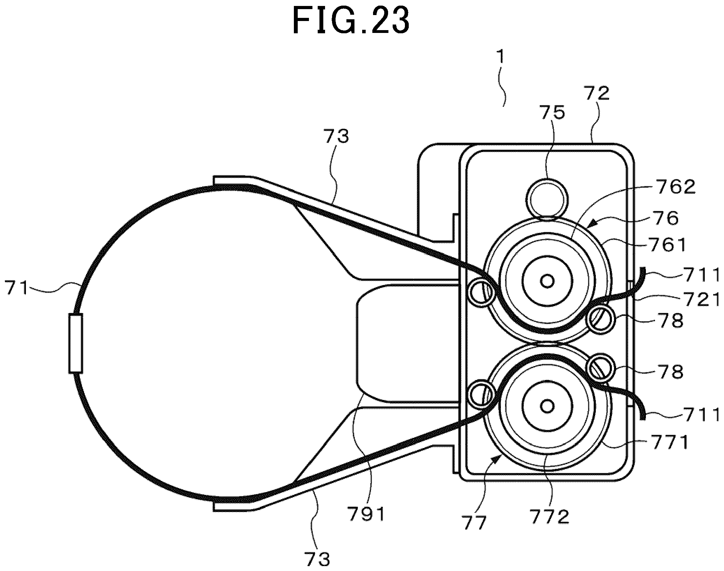

As shown in Figs. 23 to 26, in the present embodiment, the holding mechanism 20 and the separation mechanism 30 are served by flexible members 71 which are drawn in and out to increase or decrease the regions inside the respective flexible members 71. The holding mechanism 20 and the separation mechanism 30 each include a casing member 72, guide members 73, a driving unit 74, a drive gear 75, a first driven member 76, a second driven member 77, and auxiliary members 78, in addition to the flexible member 71.

The flexible member 71 is formed of a long member which does not bend under its own weight but is still flexible enough to bend. It should be noted that in the present embodiment, the expression that the flexible member 71 does not bend under its own weight refers to that, for example, in the state in which the flexible member 71 is maximally expanded, the flexible member 71 may only need to be unbendable to an extent of maintaining a state of allowing the bunch 90 to pass therethrough, and the expression should not negate that the flexible member 71 may be slightly bent under its own weight. Furthermore, in this case, the flexible member 71 is configured so as not to expand or contract, or so as to slightly flexibly expand or contract, in the longitudinal direction thereof.

The flexible member 71 may be formed of, for example, a metal or resin wire, or a belt for transmitting power. In the present embodiment, the flexible member 71 is formed of, for example, a toothed belt (also termed cogged belt). Furthermore, the flexible member 71 may be formed of a V-belt, a flat belt, or the like. If the flexible member 71 is formed of a belt or a wire, a commercially available article may be used for the flexible member 71.

The casing member 72 is formed into a container shape and houses the drive gear 75, the driven members 76 and 77, and the auxiliary members 78 inside. Both ends of the flexible member 71 are passed through the casing member 72 and drawn out therefrom. The guide members 73 are provided to the front side surface of the casing member 72, and are formed so as to extend in a V shape, with the tips thereof being more separated from each other as they are away from the casing member 72. The guide members 73 define the shape of the flexible member 71. When the flexible member 71 is drawn in and out with respect to the casing member 72, the flexible member 71 expands and contracts along the guide members 73.

For example, the driving unit 74 is configured by a stepping motor. The driving unit 74 is connected to the drive gear 75 to rotate the first driven member 76 via the drive gear 75. The first driven member 76 and the second driven member 77 have the same configuration and are respectively provided with driven gear portions 761, 771, and transmission portions 762, 772. The driven gear portions 761, 771 and the transmission portions 762, 772 are configured to be rotatable in integration.

In the present embodiment, the driven gear portion 771 of the first driven member 76 may be termed a first driven gear portion 761, and the driven gear portion 771 of the second driven member 77 may be termed a second driven gear portion 771. Also, the transmission portion 762 of the first driven member 76 may be termed a first transmission portion 762, and the transmission portion 772 of the second driven member 77 may be termed a second transmission portion 772.

The drive gear 75, the first driven gear portion 761, and the second driven gear portion 771 are configured by gears of the same module. In this case, the first driven gear portion 761 and the second driven gear portion 771 are set to have the same gear ratio. The drive gear 75 and the first driven gear portion 761 engage with each other. Also, the first driven gear portion 761 and the second driven gear portion 771 engage with each other. The transmission portions 762, 772 are configured so as to be rotatable integrally with the respective driven gear portions 761, 771, centering on the respective rotary shafts common to the driven gear portions 761, 771.

In the present embodiment, since the flexible member 71 is formed of a toothed belt, the transmission portions 762, 772 are formed of toothed pulleys which can transmit power by being brought into engagement with the teeth of the toothed belt. If the flexible member 71 is formed of a flat belt or a V-belt, the transmission portions 762, 772 can be formed of pulleys corresponding to the flat belt or the V-belt, e.g., pulleys that can transmit power using friction. In the present embodiment, the flexible member 71 has end portions 711 respectively contacting and engaging with the transmission portions 762, 772. Thus, the rotation of the driven gear portions 761, 771 is transmitted to both end-side portions 201, 201 of the flexible member 71.

If the flexible member 71 is formed of a belt or a wire, a commercially available article may be used for the flexible member 71. If the flexible member 71 is consumed due to use, the user can detach the flexible member 71 from the casing member 72 for replacement.

The auxiliary members 78, which are disposed around each of the transmission portions 762, 772, are rotatably provided to the casing member 72. The flexible member 71 is passed between the auxiliary members 78 and the transmission portions 762, 772. The auxiliary members 78 are in contact with the flexible member 71 and specifies the position of the flexible member 71 to prevent disengagement between the flexible member 71 and the transmission portions 762, 772.

With this configuration, when the drive gear 75 is rotated with the driving unit 74 driven, the rotational force is transmitted to the first driven gear portion 761 via the drive gear 75, and further to the second driven gear portion 771 via the first driven gear portion 761. Thus, the first and second driven members 76 and 77 are rotated in opposite directions. Then, the rotations of the first and second driven members 76 and 77 are transmitted to the end portions 711 of the flexible member 71 via the respective transmission portions 762, 772. Then, the end portions 711 of the flexible member 71 are drawn in or out at the same speed, so that the flexible member 71 is contracted or expanded, i.e., drawn in or out, in the directions corresponding to the rotations of the driven members 76, 77. Thus, in the harvester 1, the size of the annular shape of the flexible member 71 can be expanded or contracted by driving the driving unit 74 with the rotational direction controlled.

In the present embodiment, the ends of the flexible member 71 are drawn out of the casing member 72 through openings 721 of the casing member 72. Thus, when the ends of the flexible member 71 are drawn toward the casing member 72 to reduce the region inside the flexible member 71, the ends of the flexible member 71 are drawn out of the casing member 72 through the openings 721 of the casing member 72.

With this configuration, when the ends of the flexible member 71 are drawn toward the casing member 72, the drawn portions of the flexible member 71 are not required to be held inside the casing member 72. Accordingly, size increase of the casing member 72 can be suppressed and thus the harvester 1 can be made compact. Also, in this case, the user can touch the flexible member 71 from outside the casing member 72, and therefore, workability such as adjustment can be improved.

It should be noted that the harvester 1 may include a mechanism of taking up the ends of the flexible member 71 when these ends are drawn toward the casing member 72. In this case, the mechanism of taking up the ends of the flexible member 71 may be provided inside or outside the casing member 72. Also, in the configuration in which the ends of the flexible member 71 drawn toward the casing member 72 are held inside the casing member 72, the mechanism of taking up the ends of the flexible member 71 as mentioned above is not required to be provided as long as the ends do not interfere with other structures.

The mechanism of taking up the ends of the flexible member 71 may have a configuration in which, for example, the ends of the flexible member 71 are fixed to the respective transmission portions 762, 772 of the driven members 76, 77, so that the end portions 711 of the flexible member 71 are taken up with the rotations of the driven members 76, 77. With this configuration, teeth or friction are unnecessary, which would be necessary for the flexible member 71 and the transmission portions 762, 772 to transmit power for expansion or contraction of the flexible member 71. Therefore, the flexible member 71 can be formed of, for example, a thin ring-shaped wire or leaf spring, other than the toothed belt, flat belt, or V-belt.

Furthermore, in the separation mechanism 30 of the present embodiment, the end portions 711 of the flexible member 71 are disposed between the two transmission portions 762, 772; however, the end portions 711 of the flexible member 71 may be disposed on both outer sides of the transmission portions 762, 772. In other words, in the separation mechanism 30, the transmission portions 762, 772 may be disposed between both end portions 711 of the flexible member 71. With this configuration, the end portions 711 of the flexible member 71 can be disposed with a large curvature, i.e., with the amount of deformation of the flexible member 71 reduced, compared to the present embodiment. Accordingly, if the flexible member 71 is made of a rigid material, it is unlikely to suffer from damage such as bending. In this case, the directions of the rotations of the driving unit 74, the first driven member 76, and the second driven member 77 when drawing in or out the flexible member 71 are opposite to those of the present embodiment.

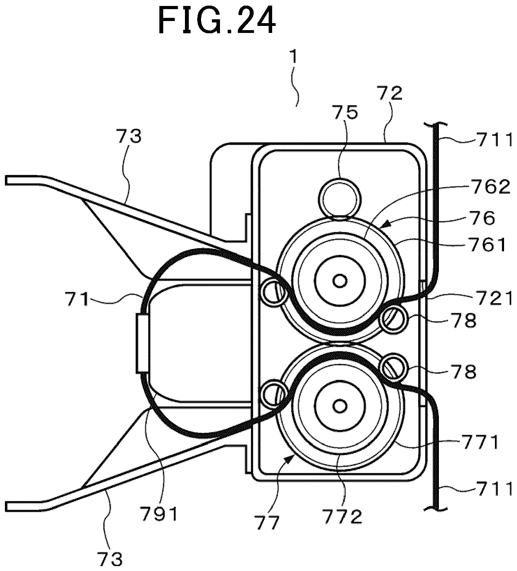

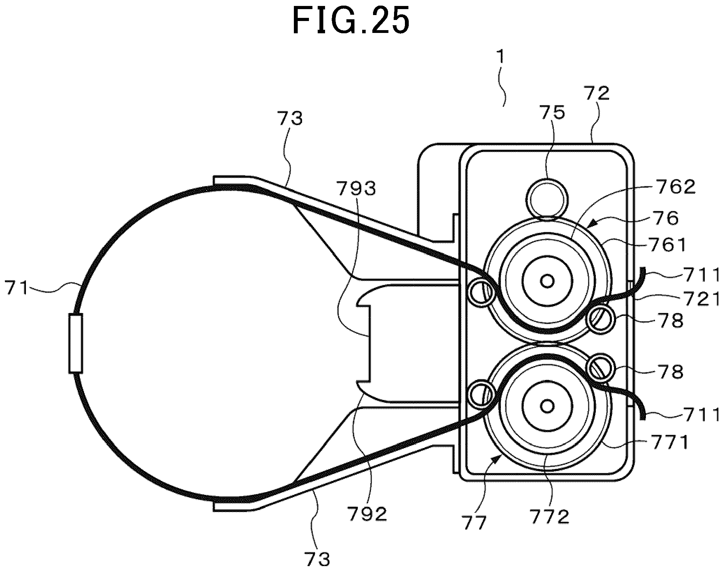

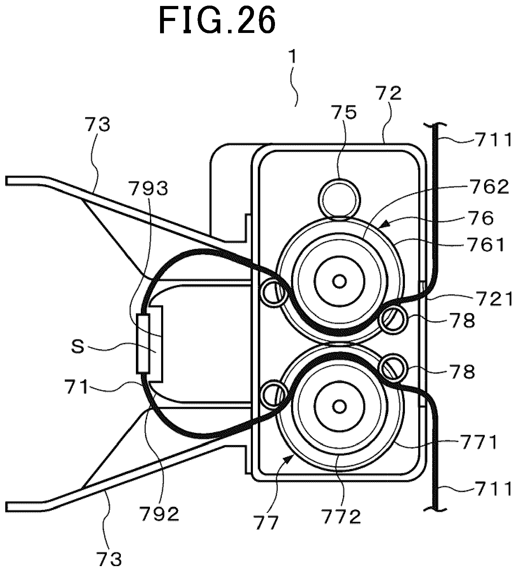

In the present embodiment, as shown in Figs. 23 and 24, the holding mechanism 20 includes a holding mechanism receiving member 791. The holding mechanism receiving member 791 is a member that receives the flexible member 71 when the flexible member 71 is drawn in and contracted, and holds the fruit stem 93 between itself and the flexible member 71. In contrast, as shown in Fig. 25 and 26, the separation mechanism 30 includes a separation mechanism receiving member 792. The separation mechanism receiving member 792 has a recess 793 in a portion facing the flexible member 71. The separation mechanism receiving member 792 forms a predetermine gap S between itself and the flexible member 71 to place the fruit stem 93 therein when the flexible member 71 is drawn in and contracted.

As shown in Fig. 22, the harvester 1 of the present embodiment has a configuration in which the holding mechanism 20 and the separation mechanism 30 are mounted to a moving mechanism 2. For example, the moving mechanism 2 is configured by an electric slider, an air cylinder, or the like. The holding mechanism 20 is mounted to the moving mechanism 2 so as not to be movable. The separation mechanism 30 is configured to be movable with respect to the moving mechanism 2.

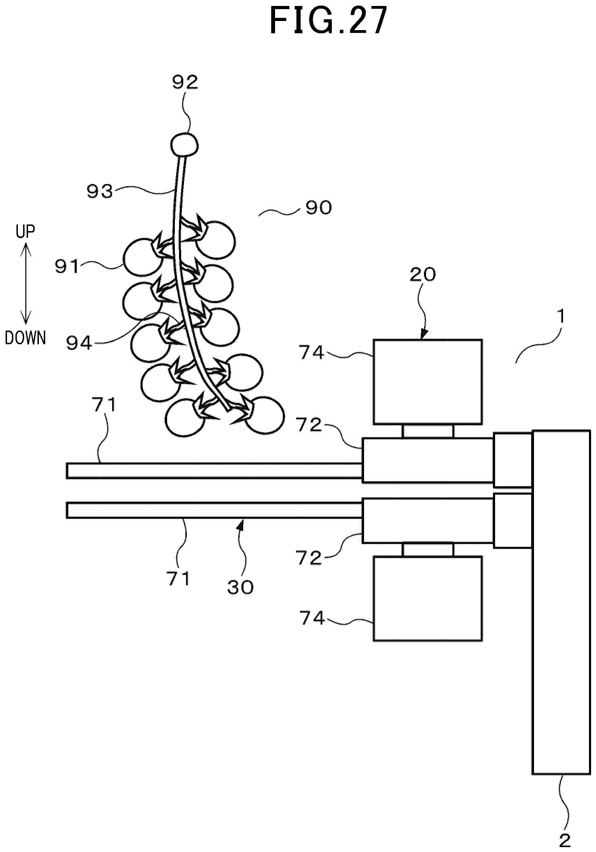

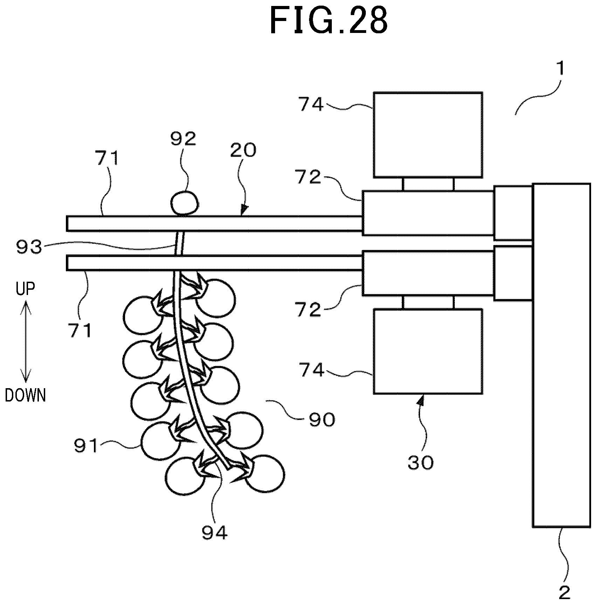

As in the above embodiments, the harvester 1 of the present embodiment is mounted to a robot arm 52 and is operated according to the control flow of Fig. 17, i.e., operated with the control substantially similar to that of the first embodiment. Specifically, when the movement processing of step S19 of Fig. 17 is executed, the control unit 60 opens the holding mechanism 20 and the separation mechanism 30, as shown in Figs. 27 and 28, and moves these mechanisms toward the base side of the fruit stem 93, while allowing the entire bunch 90 to pass through the flexible members 71.

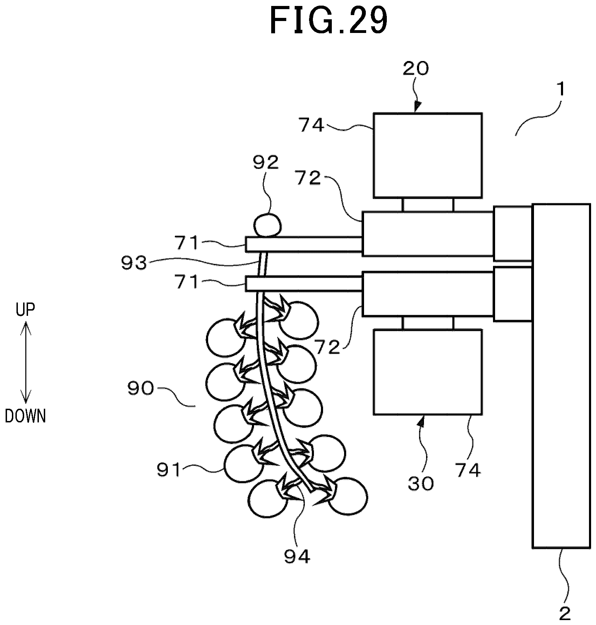

Also, the control unit 60 executes the holding processing of step S20 and the placement processing of step S21 of Fig. 17 simultaneously or substantially simultaneously. Thus, as shown in Fig. 29, the flexible member 71 of the holding member 20 is contracted to hold the fruit stem 93 between the flexible member 71 and the holding mechanism receiving member 791, while the flexible member 71 of the separation mechanism 30 is contracted to place the fruit stem 93 inside the gap S formed between the flexible member 71 and the recess 793 of the receiving member 792.

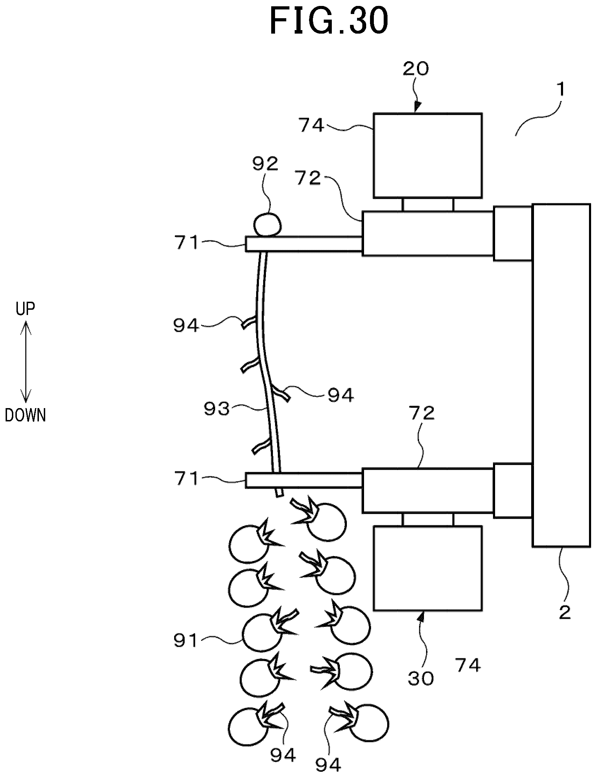

Thereafter, the control unit 60 executes the separation processing of step S22 of Fig. 17. In this case, the control unit 60 drives the moving mechanism 2 to move the separation mechanism 30 in the direction away from the holding mechanism 20, i.e., downward, in this case. Thus, as shown in Fig. 30, the fruit 91 is separated from the fruit stem 93 to individually harvest the fruit 91.

With this configuration, advantageous effects similar to those of the above embodiments can also be achieved.

Furthermore, according to the present embodiment, the flexible member 71 is formed of a long member which does not bend under its own weight but is still flexible enough to bend. This configuration can prevent bending of the flexible member 71 under its own weight, which would otherwise deform or eliminate the region inside the flexible member 71. Accordingly, the bunch 90 can be more reliably passed through the flexible members 71, as a result of which the harvesting target 91 can be more reliably harvested.

Furthermore, the flexible member 71 is formed of a flexible member. Thus, the size of the inner region of the flexible member 71 can be changed by changing the amount of draw-out of the flexible member 71. In addition, by changing the shape of the guide members 73, the shape of the inner region when drawing out the flexible member 71 can be changed into a vertical or horizontal ellipse, or the like. Thus, according to the present embodiment, the size or shape of the inner region of the flexible member 71 can be easily changed conforming to the size or shape of the harvesting target 91, and therefore, a wide variety of harvesting targets can be flexibly handled.

Furthermore, since the flexible member 71 is formed of a flexible member, damage to the harvesting target 91 or the main stem 92 can be suppressed as much as possible when the flexible member 71 contacts the harvesting target 91 or the main stem 92. Consequently, the main stem 92 or branch, or the harvesting target 91 is prevented from being damaged by the flexible member 71, and thus the harvesting target 91 can be safely harvested.

### (Fourth Embodiment)

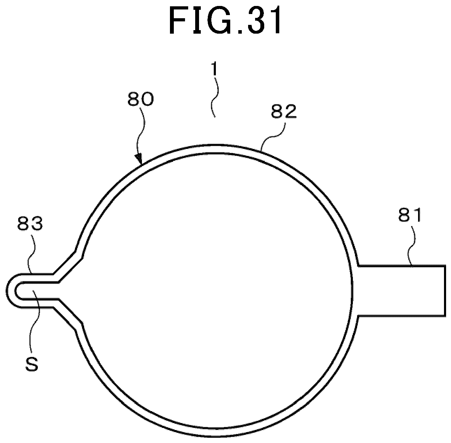

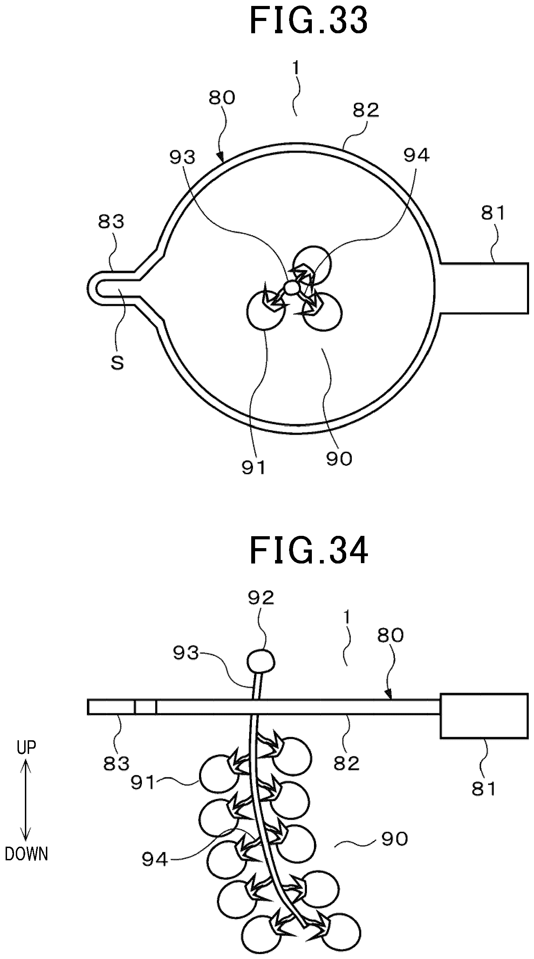

Next, referring to Figs. 31 to 37, a fourth embodiment will be described.

The crop harvesting device 1 of the present embodiment includes a separation mechanism 80. The crop harvesting device 1 of the present embodiment is configured by only the separation mechanism 80. The separation mechanism 80 serving as the crop harvesting device 1 is operable being held by worker's hand. The separation mechanism 80 of the fourth embodiment may also be used being mounted to a robot arm 52 as in the above embodiments.

The separation mechanism 80 of the present embodiment is formed of a material having rigidity, such as metal or resins. As shown in Fig. 31, the separation mechanism 80 includes a handle 81, a large-diameter portion 82, and a small-diameter portion 83. The handle 81 is a portion held by worker's hand. In the case of using the separation mechanism 80 being mounted to a robot arm 52, the handle 81 is changed to a mounting portion for mounting the mechanism to the tip of the robot arm 52. The large-diameter portion 82 is configured such that the inner diameter thereof is larger than the outer diameter of the entire bunch 90 of the harvesting target 91. The small-diameter portion 83 communicates with the large-diameter portion 82 and forms a gap S which is configured to have an inner diameter smaller than the contour of the entire bunch 90 and larger than the outer diameter of the fruit stem 93.

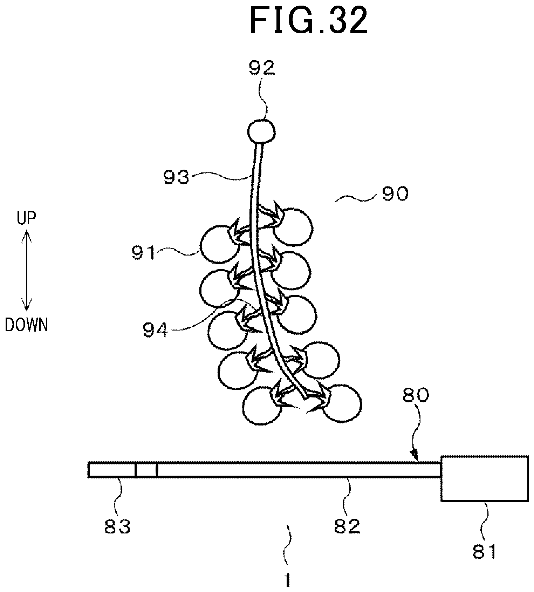

With this configuration, the worker operates the separation mechanism 80 by hand and sequentially performs the movement processing, placement processing, and separation processing. In this case, the worker executes the movement processing first, and as shown in Figs. 32 to 34, passes the entire bunch 90 through the large-diameter portion 82 by scooping up the bunch 90 from below to move the separation mechanism 80 to the base side of the fruit stem 93.

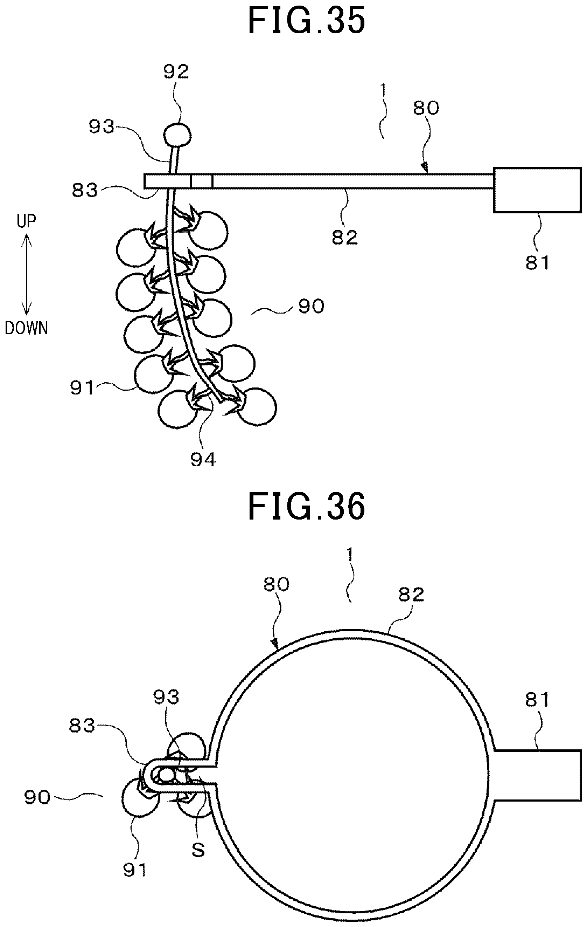

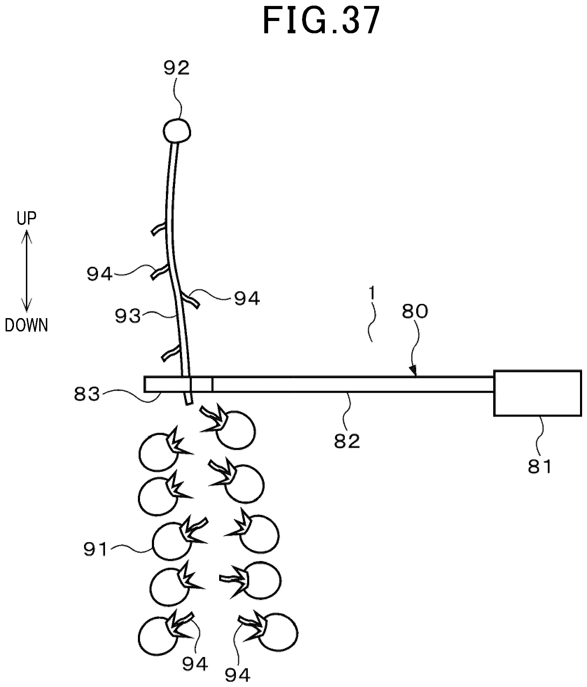

Next, as shown in Figs. 35 and 36, the worker executes the placement processing, and pulls the separation mechanism 80 forward to move the fruit stem 93 from inside the large-diameter portion 82 to the inside of the small-diameter portion 83. Then, the worker executes the separation processing and as shown in Fig. 37, moves the separation mechanism 80 toward the tip side of the fruit stem 93, i.e., downward, in this case. Thus, the fruit 91 or the fruit stalks 94 are pushed toward the inner periphery of the small-diameter portion 83 to separate the fruit 91 from the fruit stem 93 for individual harvesting. It should be noted that the worker may execute the holding processing in parallel with the separation processing. In this case, the worker can execute the holding processing by, for example, holding the upper end portion of the fruit stem 93 or holding the main stem 92 by worker's hand.

In the present embodiment, advantageous effects similar to those of the above embodiments can also be achieved.

Also, according to the present embodiment, since the separation mechanism 80 does not include a movable part or a driving unit such as a motor, the harvester 1 can be provided at low cost with a simple configuration.

### (Other Embodiments)

The present disclosure should not be limited to the embodiments described above and illustrated in the drawings, but can be modified, combined or extended as desired without departing from the spirit thereof.

The numerical values and the like shown in the above embodiments are only examples and should not be limited to these.

For example, the harvesters 1 of the first to third embodiments may be manually operated.

Alternatively, a holding mechanism 20 selected from the first to third embodiments may be combined with a separation mechanism 30 selected from the first to third embodiments to configure a harvester 1.

The present disclosure has been described based on some embodiments; however, the present disclosure should not be construed as being limited to these embodiments or structures. The scope of the present disclosure should encompass various modifications or equivalents. In addition, various combinations or modes, and further, other combinations or modes including one or more additional elements or fewer elements of the various combinations or modes should also be included within the category or idea of the present disclosure.

## Claims

1. A crop harvesting method for separating fruit (91) in a bunch (90) from a fruit stem (93) to individually harvest the fruit, comprising:
placement processing that places a separation mechanism (30), in which a predetermined gap (S) is formed, such that a base-side portion of the fruit stem is positioned inside the gap; and
separation processing that is executed following the placement processing to move the separation mechanism toward a tip side of the fruit stem to separate the fruit from the fruit stem.

2. The crop harvesting method according to claim 1, further comprising:
holding processing that holds the base-side portion of the fruit stem further than the separation mechanism while the separation mechanism is moved.

3. The crop harvesting method according to claim 1 or 2, wherein
the separation mechanism is configured to switch state between an open state in which the separation mechanism is opened larger than an outer diameter of the entire bunch so that the entire bunch can be inserted inside the separation mechanism, and a closed state in which the separation mechanism is closed forming the gap inside the separation mechanism;
the method further comprises movement processing that is executed preceding the placement processing to move the separation mechanism from the tip side of the fruit stem to the base side of the fruit stem, with the separation mechanism brought into the open state, while allowing the entire bunch to pass through the separation mechanism; and
the placement processing includes processing of switching state of the separation mechanism to the closed state.

4. The crop harvesting method according to claim 1 or 2, wherein
the separation mechanism is configured to include a large-diameter portion (82) that has an inner diameter larger than a contour of the entire bunch, and a small-diameter portion (83) that communicates with the large-diameter portion and has an inner diameter that is smaller than the contour of the entire bunch and larger than an outer diameter of the fruit stem to form the gap; and
the placement processing further includes processing of moving the separation mechanism from the tip side of the fruit stem to the base side of the fruit stem while allowing the entire bunch to pass through the large-diameter portion, followed by moving the separation mechanism to place the fruit stem inside the small-diameter portion.

5. A crop harvesting device (1) used for separating fruit (91) in a bunch (90) from a fruit stem (93) to individually harvest the fruit, comprising:
a separation mechanism (30) that is configured to switch between an open state in which the separation mechanism is opened so as to be larger than an outer diameter of the entire bunch to insert the entire bunch therethrough, and a closed state in which the separation mechanism is closed to form a predetermined gap therein that is smaller than the outer diameter of the entire bunch and larger than an outer diameter of the fruit stem.

6. The crop harvesting device according to claim 5, wherein
the separation mechanism is a link mechanism formed of a member having rigidity.

7. The crop harvesting device according to claim 5, wherein
the separation mechanism is configured to include a flexible member (71) having flexibility which does not bend under own weight thereof but is flexible enough to bend.

8. A crop harvesting device (1) used for separating fruit (91) in a bunch (90) from a fruit stem (93) to individually harvest the fruit, comprising:
a separation mechanism (80) that includes a large-diameter portion (82) having an inner diameter that is larger than a contour of the entire bunch, and a small-diameter portion (83) communicating with the large-diameter portion and having an inner diameter smaller than the contour of the entire bunch and larger than the outer diameter of the fruit stem to form the gap.

9. The crop harvesting device according to any one of claims 5 to 8, further comprising:
a holding mechanism (20) provided on a base side of the fruit stem with respect to the separation mechanism to hold the fruit stem.

10. A crop harvesting system (50) comprising:
a robot arm (52) to which the crop harvesting device (1) according to any one of claims 5 to 8 is mounted;
a viewing device (51) that can acquire visual information including position information of a harvesting target (91);
a harvesting target detection processor (61) that can execute harvesting target detection processing for detecting the harvesting target included in the visual information acquired by the viewing device;
a position information specification processor (62) that can execute position specification processing for specifying positions including a tip position (Pb) and a base position (Pt) of the harvesting target detected in the harvesting target detection processing;
a moving path generation processor (63) that can execute moving path generation processing for generating a moving path (R) of the crop harvesting device, the moving path being from an outer side of the tip position to the base position of the harvesting target;
a movement processor (64) that can execute movement processing for driving and controlling the robot arm to move the crop harvesting device along the moving path generated in the moving path generation processing, and passing the harvesting target through the separation mechanism in the open state or passing the harvesting target through the large-diameter portion;
a placement processor (66) that is executed following the movement processing to execute placement processing for bringing the crop harvesting device into a closed state to place a base portion of the fruit stem inside the gap, or placement processing for driving and controlling the robot arm to place a base portion of the fruit stem inside the small-diameter portion that is the gap; and
a separation processor (67) that is executed following the placement processing to execute separation processing for driving and controlling the robot arm to move the crop harvesting device toward a tip side of the fruit stem to separate the fruit from the fruit stem.
